(19) Europäisches Patentamt
European Patent Office
Office européen des brevets

(11) EP 3 481 920 B1

# (12) EUROPÄISCHE PATENTSCHRIFT

(45) Veröffentlichungstag und Bekanntmachung des Hinweises auf die Patenterteilung:
**11.08.2021 Patentblatt 2021/32**

(21) Anmeldenummer: **17731923.3**

(22) Anmeldetag: **27.06.2017**

(51) Int Cl.:
***C10L 1/188*** *(2006.01)* ***C10L 1/198*** *(2006.01)*
***C10L 10/04*** *(2006.01)* ***C10M 129/42*** *(2006.01)*

(86) Internationale Anmeldenummer:
**PCT/EP2017/065751**

(87) Internationale Veröffentlichungsnummer:
**WO 2018/007191 (11.01.2018 Gazette 2018/02)**

## (54) VERWENDUNG VON KORROSIONSINHIBITOREN FÜR KRAFT- UND SCHMIERSTOFFE

USE OF CORROSION INHIBITORS FOR FUELS AND LUBRICANTS

UTILISATION D'ADDITFS ANTICORROSIVS POUR DES CARBURANTS ET DES LUBRIFIANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.07.2016 EP 16177922**

(43) Veröffentlichungstag der Anmeldung:
**15.05.2019 Patentblatt 2019/20**

(73) Patentinhaber: **BASF SE**
**67056 Ludwigshafen am Rhein (DE)**

(72) Erfinder:
- **MEZGER, Jochen**
  **67056 Ludwigshafen (DE)**
- **CSIHONY, Szilard**
  **67056 Ludwigshafen (DE)**

(74) Vertreter: **BASF IP Association**
**BASF SE**
**G-FLP-C006**
**67056 Ludwigshafen (DE)**

(56) Entgegenhaltungen:
**EP-A2- 0 457 599 WO-A1-2004/024850**

EP 3 481 920 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft neue Verwendungen von Korrosionsinhibitoren in Kraft- und Schmierstoffen.

Korrosionsinhibitoren sind gängige Additive in Kraft- und Schmierstoffen, die oftmals auf säuregruppenhaltigen Strukturen beruhen, z.B. Dimerfettsäuren.

Nachteilig an diesen Korrosionsinhibitoren ist, daß sie insbesondere in Gegenwart von Calcium-Ionen zu Ausfällungen neigen und dadurch ihre korrosionsinhibierende Wirkung vermindert wird. Die durch diese Ausfällungen gebildeten Ablagerungen können darüber hinaus die Funktionsweise von Motoren, Motorbestandteilen oder Teilen des Kraftstoffsystems, insbesondere dem Einspritzsystem, speziell den Einspritzpumpen oder-düsen, beeinträchtigen.

Unter dem "Einspritzsystem" wird dabei der Teil des Kraftstoffsystems in Kraftfahrzeugen von Kraftstoffpumpe bis einschließlich Injektorauslass verstanden. Als "Kraftstoffsystem" werden dabei die Bauteile von Kraftfahrzeugen verstanden, die mit dem jeweiligen Kraftstoff in Kontakt stehen, bevorzugt der Bereich von Tank bis einschließlich Injektorauslass.

Es stelle eine Ausführungsform der vorliegenden Erfindung dar, daß die erfindungsgemäßen Verbindungen gegen Ablagerungen nicht nur im Einspritzsystem wirken, sondern auch im übrigen Kraftstoffsystem, hier insbesondere gegen Ablagerungen in Kraftstofffiltern und -pumpen.

Es bestand daher die Aufgabe, Korrosionsinhibitoren zur Verfügung zu stellen, die eine erhöhte Verträglichkeit gegen Calcium-Ionen zeigen und dabei ihre Wirkung als Korrosionsinhibitor behalten.

Die Aufgabe wird gelöst durch die anspruchsgemäße Verwendung.

Aus WO 2010/042378 A1 ist die Verwendung von hydrolysierten und unhydrolysierten Hydrocarbylbernsteinsäuren gegen Metallaufnahme bekannt.

In WO 2004/024850 A1 wird die Herstellung von Polyisobutenbersteinsäure und deren Anhydrid, sowie deren antikorrosive Wirkung beschrieben.

EP 235868 A1 beschreibt explizit eine antikorrosive Wirkung des Diels-Alder Adduktes von Polyisobutylen und Maleinsäureanhydrid auf Stahl, Aluminium und Messing.

US 4655946 beschreibt eine antikorrosive Wirkung von Umsetzungsprodukten von Polyisobutenbernsteinsäuren mit Aminen.

In keiner dieser Schriften werden Mehrfachaddukte von Maleinsäureanhydrid an Polyisobuten beschrieben oder deren vorteilhafte Wirkung als Korrosionsinhibitor erkannt. Ferner wird die Sensibilität der Korrosionsinhibitoren auf Metallsalze nicht erkannt und gelöst.

Demgemäß ist Gegenstand der Erfindung die Verwendung von freie Säuregruppen tragenden Umsetzungsprodukten von Polyisobuten, erhältlich, bevorzugt erhalten indem man Polyisobuten (A) mit einem zahlenmittleren Molekulargewicht Mn von 200 bis 10000 mit Maleinsäure oder deren Derivate, ausgewählt aus der Gruppe bestehend aus Monoalkylestern, Dialkylestern und Anhydriden (B), in einem stöchiometrischen Verhältnis von mehr als einem Äquivalent Maleinsäure oder deren Derivate (B), pro reaktiver Doppelbindung im Polyisobuten (A) umsetzt,
mit der Maßgabe, daß

- im Falle der Verwendung von Monoalkylestern und/oder Dialkylestern als Verbindung (B) mindestens 10% der vorhandenen Estergruppen verseift und/oder
- im Fall der Verwendung von Anhydriden als Verbindung (B) mindestens 10% der vorhandenen Anhydridgruppen hydrolysiert vorliegen,

als Korrosionsinhibitoren in Kraft- oder Schmierstoffen, bevorzugt in Kraftstoffen, besonders bevorzugt in Kraftstoffen, die einen Gehalt an Alkali- und/oder Erdalkalimetallen und/oder Zink von mindestens 0,1 Gew.ppm aufweisen, in dem das freie Säuregruppen tragende Umsetzungsprodukt von Polyisobuten einen Bismaleinierungsgrad von 11 bis 40% aufweist,
wobei der Bismaleinierungsgrad (BMG) gemäß der Formel

$$BMG = 100\% \times [(wt\text{-}\%(BM\ PIBSA)/(wt\text{-}\%(BM\ PIBSA)+wt\text{-}\%(PIBSA))]$$

berechnet wird,
wobei wt-%(X) für den jeweiligen Gewichtsanteil der Komponente X (X = PIBSA (einfach maleiniertes Polyisobuten) oder BM PIBSA (mehr als einfach maleiniertes Polyisobuten)) im Umsetzungsprodukt von Polyisobuten mit Maleinsäureanhydrid steht.

Die beschriebenen freie Säuregruppen tragenden Umsetzungsprodukte von Polyisobuten zeigen einen besonderen Vorteil in Kraft- oder Schmierstoffen, besonders in Kraftstoffen, die einen Gehalt an Alkali- und/oder Erdalkalimetallen und/oder Zink von mindestens 0,1 Gew.ppm aufweisen, besonders bevorzugt mindestens 0,2 Gew.ppm und

ganz besonders bevorzugt mindestens 0,3 Gew.ppm und insbesondere mindestens 0,5 Gew.ppm. Denkbar ist auch ein Gehalt an Alkali- und/oder Erdalkalimetallen und/oder Zink von mindestens 1 Gew.ppm, bevorzugt mindestens 2 und besonders bevorzugt mindestens 3 Gew.ppm.

Es stellt einen Vorteil der beschriebenen freie Säuregruppen tragenden Umsetzungsprodukte von Polyisobuten dar, daß sie ihre korrosionsinhibierende Wirkung auch in Gegenwart von Alkali- und/oder Erdalkalimetallen und/oder Zink zeigen, bevorzugt auch in Gegenwart von Erdalkalimetallen. Der Gehalt an Alkali- und/oder Erdalkalimetallen in Kraftstoffen rührt beispielsweise her durch Vermischung mit Alkali- und/oder Erdalkalimetallen-haltigen Schmierstoffen, beispielsweise in der Kraftstoffpumpe. Ferner können Alkali- und/oder Erdalkalimetalle aus nicht oder unzureichend entsalzten Kraftstoffadditiven stammen, beispielsweise Trägerölen. Durch das Einschleppen von Alkali- und/oder Erdalkalimetallen in die Kraftstoffe können die oben genannten Nachteile hervorgerufen werden. Eine Quelle für Zink sind beispielsweise anti-wear Additive.

Als Alkalimetalle zu nennen sind besonders Natrium und Kalium, insbesondere Natrium.

Als Erdalkalimetalle zu nennen sind besonders Magnesium und Calcium, insbesondere Calcium.

Ferner ist Zink hervorzuheben

Mit besonderem Vorteil sind die beschriebenen freie Säuregruppen tragenden Umsetzungsprodukte von Polyisobuten auch in Gegenwart von Calcium noch aktiv und zeigen keine Ausfällungen.

Die angegebenen Mengen an Alkali- und/oder Erdalkalimetallen und/oder Zink beziehen sich dabei jeweils auf einzelne Metallespezies.

Beschreibung der freie Säuregruppen tragenden Umsetzungsprodukte von Polyisobuten

Die Aufgabe wurde gelöst durch freie Säuregruppen tragenden Umsetzungsprodukte von Polyisobuten, erhältlich, bevorzugt erhalten indem man Polyisobuten (A) mit einem zahlenmittleren Molekulargewicht $M_n$ von 200 bis 10000, bevorzugt 500 bis 2500 und besonders bevorzugt 700 bis 1100 mit Maleinsäure oder deren Derivate (B), in einem stöchiometrischen Verhältnis von mehr als einem Äquivalent Maleinsäure oder deren Derivate (B), pro reaktiver Doppelbindung im Polyisobuten (A) umsetzt.

Die Derivate sind dabei ausgewählt aus der Gruppe bestehend aus Monoalkylestern, Dialkylestern und Anhydriden.

Um im Fall der Umsetzung von Polyisobutenen mit Alkylestern bzw. Anhydriden als Verbindungen (B) freie Säuregruppen zu erzeugen herrscht dabei die Maßgabe, daß im Umsetzungsprodukt

- im Falle der Verwendung von Monoalkylestern und/oder Dialkylestern als Verbindung (B) mindestens 10% der vorhandenen Estergruppen verseift und/oder
- im Fall der Verwendung von Anhydriden als Verbindung (B) mindestens 10% der vorhandenen Anhydridgruppen hydrolysiert vorliegen.

Unter "freie Säuregruppen tragenden Umsetzungsprodukten" werden dabei sowohl bevorzugt die, falls erforderlich hydrolysierten bzw. verseiften, Umsetzungsprodukte von Polyisobuten mit Maleinsäure und deren Derivaten im engeren Sinn verstanden, als auch im weiteren Sinne solche Produkte, die aus diesen erhalten werden, da die Monocarbonsäuren oftmals z.B. durch Decarboxylierung aus den Dicarbonsäuren erhalten werden können.

Bei dem einsetzbaren Polymer (A) handelt es sich um iso-Buten-Homopolymere oder iso-Buten enthaltende Copolymere, hier unter dem Begriff "Polyisobuten" zusammengefaßt, die wie folgt aus den jeweiligen Monomergemischen erhältlich sind:

Für den Einsatz von Isobuten oder eines Isobuten enthaltenden Monomerengemisches als zu polymerisierendem Monomer eignet sich als Isobuten-Quelle sowohl Rein-Isobuten als auch Isobuten-haltige $C_4$-Kohlenwasserstoffströme, beispielsweise $C_4$-Raffinate, insbesondere "Raffinat 1", $C_4$-Schnitte aus der Isobutan-Dehydrierung, $C_4$-Schnitte aus Steamcrackern und aus FCC-Crackern (fluid catalysed cracking), sofern sie weitgehend von darin enthaltenem 1,3-Butadien befreit sind. Ein $C_4$-Kohlenwasserstoff-strom aus einer FCC-Raffinerieeinheit ist auch als "b/b"-Strom bekannt. Weitere geeignete Isobuten-haltige $C_4$-Kohlenwasserstoffströme sind beispielsweise der Produktstrom einer Propylen-Isobutan-Cooxidation oder der Produktstrom aus einer Metathese-Einheit, welche in der Regel nach üblicher Aufreinigung und/oder Aufkonzentrierung eingesetzt werden. Geeignete $C_4$-Kohlenwasserstoffströme enthalten in der Regel weniger als 500 ppm, vorzugsweise weniger als 200 ppm, Butadien. Die Anwesenheit von 1-Buten sowie von cis- und trans-2-Buten ist weitgehend unkritisch. Typischerweise liegt die Isobutenkonzentration in den genannten $C_4$-Kohlenwasserstoffströmen im Bereich von 40 bis 60 Gew.-%. So besteht Raffinat 1 in der Regel im wesentlichen aus 30 bis 50 Gew.-% Isobuten, 10 bis 50 Gew.-% 1-Buten, 10 bis 40 Gew.-% cis- und trans-2-Buten sowie 2 bis 35 Gew.-% Butanen; beim anschließenden Polymerisationsverfahren verhalten sich die unverzeigten Butene im Raffinat 1 in der Regel praktisch inert und nur das Isobuten wird polymerisiert.

In einer bevorzugten Ausführungsform setzt man als Monomerquelle für die Polymerisation einen technischen $C_4$-Kohlenwasserstoffstrom mit einem Isobuten-Gehalt von 1 bis 100 Gew.-%, insbesondere von 1 bis 99 Gew.-%, vor allem von 1 bis 90 Gew.-%, besonders bevorzugt von 30 bis 60 Gew.-%, insbesondere einen Raffinat 1-Strom, einen

b/b-Strom aus einer FCC-Raffinerieeinheit, einen Produktstrom einer Propylen-Isobutan-Cooxidation oder einen Produktstrom aus einer Metathese-Einheit ein.

Insbesondere bei Verwendung eines Raffinat 1-Stromes als Isobutenquelle hat sich die Verwendung von Wasser als alleinigem oder als weiterem Initiator bewährt, vor allem wenn man bei Temperaturen von -20° C bis +30° C, insbesondere von 0° C bis +20° C, polymerisiert. Bei Temperaturen von -20° C bis +30° C, insbesondere von 0° C bis +20° C, kann man bei Verwendung eines Raffinat 1-Stromes als Isobutenquelle jedoch auch auf den Einsatz eines Initiators verzichten.

Das genannte Isobuten-haltige Monomerengemisch kann geringe Mengen an Kontaminanten wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

Es können auch Monomermischungen von Isobuten beziehungsweise des Isobuten-haltigen Kohlenwasserstoffgemischs mit olefinisch ungesättigten Monomeren, welche mit Isobuten copolymerisierbar sind, umgesetzt werden. Sofern Monomermischungen des Isobutens mit geeigneten Comonomeren copolymerisiert werden sollen, enthält die Monomermischung vorzugsweise wenigstens 5 Gew.-%, besonders bevorzugt wenigstens 10 Gew.-% und insbesondere wenigstens 20 Gew.-% Isobuten, und vorzugsweise höchstens 95 Gew.-%, besonders bevorzugt höchstens 90 Gew.-% und insbesondere höchstens 80 Gew.-% Comonomere.

Als copolymerisierbare Monomere kommen in Betracht: Vinylaromaten wie Styrol und α-Methylstyrol, $C_1$- bis $C_4$-Alkylstyrole wie 2-, 3- und 4-Methylstyrol und 4-tert.-Butyl-styrol, sowie Isoolefine mit 5 bis 10 Kohlenstoffatomen wie 2-Methylbuten-1, 2-Methylpenten-1, 2-Methylhexen-1, 2-Ethylpenten-1, 2-Ethylhexen-1 und 2-Propylhepten-1. Weiterhin kommen - abhängig von den Polymerisationsbedingungen - als Comonomere auch Isopren, 1-Buten und cis- und trans-2-Buten in Betracht.

Das Verfahren kann so ausgestaltet werden, dass bevorzugt statistische Polymere oder bevorzugt Blockcopolymere entstehen. Zur Herstellung von Blockcopolymeren kann man beispielsweise die verschiedenen Monomere nacheinander der Polymerisationsreaktion zuführen, wobei die Zugabe des zweiten Comonomers insbesondere erst dann erfolgt, wenn das erste Comonomer zumindest teilweise schon polymerisiert ist. Auf diese Weise sind sowohl Diblock-, Triblock- als auch höhere Blockcopolymere zugänglich, die je nach Reihenfolge der Monomerzugabe einen Block des einen oder anderen Comonomers als terminalen Block aufweisen. Blockcopolymere entstehen in einigen Fällen aber auch dann, wenn alle Comonomere zwar gleichzeitig der Polymerisationsreaktion zugeführt werden, eines davon aber signifikant schneller polymerisiert als das oder die anderen. Dies ist insbesondere dann der Fall, wenn Isobuten und eine vinylaromatische Verbindung, insbesondere Styrol, im erfindungsgemäßen Verfahren copolymerisiert werden. Dabei entstehen vorzugsweise Blockcopolymere mit einem terminalen Polystyrolblock. Dies ist darauf zurückzuführen, dass die vinylaromatische Verbindung, speziell Styrol, signifikant langsamer polymerisiert als Isobuten.

Die Polymerisation kann sowohl kontinuierlich als auch diskontinuierlich erfolgen. Kontinuierliche Verfahren können in Analogie zu bekannten Verfahren des Standes der Technik zur kontinuierlichen Polymerisation von Isobuten in Gegenwart von Lewis-Säuren, bevorzugt Bortrifluorid- oder Aluminiumtrichlorid- oder Alkylaluminiumchlorid-basierten Katalysatoren, in flüssiger Phase durchgeführt werden.

Als "reaktive Doppelbindungen" oder "Vinylidenbindungen" werden im Rahmen der vorliegenden Erfindung terminale, sogenannte $\alpha$- und $\beta$-Doppelbindungen (in Summe) verstanden. Diese zeichnen sich durch folgende Strukturelemente (hier dargestellt am Beispiel des iso-Buten Homopolymers) aus:

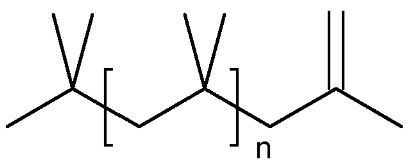

$\alpha$-Doppelbindung

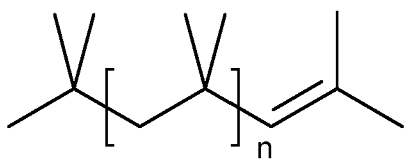

$\beta$-Doppelbindung

Der Anteil an reaktiven Doppelbindungen in den erfindungsgemäß einsetzbaren Isobutenhomo- oder -copolymeren, bezogen auf $\alpha$- und $\beta$-Doppelbindungen in Summe, kann von 30 bis 100 mol% betragen, bevorzugt 40 bis 97, besonders bevorzugt 50 bis 95, ganz besonders bevorzugt 55 bis 93 und insbesondere 60 bis 90 mol%.

Die Verteilung von $\alpha$- : $\beta$-Doppelbindungen im Polyisobuten (A) beträgt in der Regel von 100:0 bis 10:90, bevorzugt von 99:1 bis 20:80, besonders bevorzugt von 98:2 bis 30:70, ganz besonders bevorzugt von 97:3 bis 40:60 und insbesondere von 95:5 bis 50:50.

Der Anteil an $\alpha$- und $\beta$-Doppelbindungen als auch die Verteilung von $\alpha$- : $\beta$-Doppelbindungen hängt von der Herstellung der Polyisobutene (A) ab.

Der Gehalt an Doppelbindungen wird bestimmt und den jeweiligen Strukturen zugeordnet gemäß der $^{13}$C-NMR Methode wie beschrieben in James J. Harrison, Donald C. Young, Charles L. Mayne, J. Org. Chem. 1997, 62, 693-699.

Die Vinylidengruppen zeigen die höchste Reaktivität, beispielsweise bei der thermischen Addition an sterisch anspruchsvolle Reaktionspartner wie Maleinsäureanhydrid, wohingegen eine weiter im Inneren der Makromoleküle liegende Doppelbindung in den meisten Fällen keine oder geringere Reaktivität bei Funktionalisierungsreaktionen zeigt.

Häufig reagieren unter den Vinylidengruppen die $\alpha$-Doppelbindungen schneller und bereitwilliger als die $\beta$ -Doppelbindungen, so daß im Reaktionsgemisch im Verlauf der Reaktion die Reaktionsprodukte der Umsetzung der $\alpha$ -Doppelbindungen zunächst in höherem Maße gebildet werden als die der $\beta$-Doppelbindungen. Dies kann dazu führen, daß zur Umsetzung der $\beta$-Doppelbindungen schärfere Reaktionsbedingungen erforderlich sind als zur Umsetzung der $\alpha$-Doppelbindungen.

Das zahlenmittlere Molekulargewicht $M_n$ der in das erfindungsgemäße Verfahren einsetzbaren Polyisobutene beträgt von 200 bis 10000.

Mit Vorteil können Polyisobutene mit einem Molekulargewicht $M_n$ von mindestens 500 und besonders bevorzugt von mindestens 700 g/mol eingesetzt werden.

Das Molekulargewicht $M_n$ der Polyisobutene kann bevorzugt bis zu 2500 und besonders bevorzugt bis zu 1100 g/mol betragen.

Die Polydispersität $M_w/M_n$ kann von 1 bis 10, vorzugsweise von 1,05 bis 8, besonders bevorzugt von 1,1 bis 7, ganz besonders bevorzugt von 1,15 bis 6 und insbesondere bevorzugt von 1,2 bis 5 betragen.

Das gewichtsmittlere Molekulargewicht $M_w$ kann aus diesen Daten für $M_n$ und Polydispersität errechnet werden.

Als Reaktionspartner für das Polyisobuten (A) dient Maleinsäure, sowie deren Derivate.

Unter Derivaten werden dabei verstanden

- die betreffenden Anhydride in monomerer oder auch polymerer Form,
- Mono- oder Dialkylester, bevorzugt Mono- oder Di-$C_1$-$C_4$-alkylester, besonders bevorzugt Mono- oder Dimethylester oder die entsprechenden Mono- oder Diethylester, sowie
- gemischte Ester, bevorzugt gemischte Ester mit unterschiedlichen $C_1$-$C_4$-Alkylkomponenten, besonders bevorzugt gemischte Methylethylester.

Bevorzugt handelt es sich bei den Derivaten um Anhydride in monomerer Form oder Di-$C_1$-$C_4$-alkylester, besonders bevorzugt um Anhydride oder Methylester und ganz besonders bevorzugt um Anhydride in monomerer Form.

Unter $C_1$-$C_4$-Alkyl wird im Rahmen dieser Schrift Methyl, Ethyl, *iso*-Propyl, n-Propyl, n-Butyl, *iso*-Butyl, *sek*-Butyl und *tert*-Butyl verstanden, bevorzugt Methyl und Ethyl, besonders bevorzugt Methyl.
Insbesondere handelt es sich bei dem Reaktionspartner (B) um Maleinsäureanhydrid.

Das molare Verhältnis von Komponente (B) zu reaktiver Doppelbindung im Polyisobuten (A) beträgt erfindungsgemäß mehr als 1:1, besonders bevorzugt mindestens 1,1 : 1, ganz besonders bevorzugt mindestens 1,2 : 1, insbesondere mindestens 1,3 : 1 und speziell mindestens 1,5 : 1.

In der Regel ist bringt ein molares Verhältnis von Komponente (B) zu reaktiver Doppelbindung im Polyisobuten (A) von mehr als 30 : 1 keinen Vorteil, bevorzugt beträgt es bis zu 25 : 1, besonders bevorzugt bis zu 20 : 1 und ganz besonders bevorzugt bis zu 18 : 1.

Ein Überschuß an Komponente (B) kann in der Regel leicht destillativ bzw. per Sublimation abgetrennt werden. Die so wiedergewonnene überschüssige Komponente (B) kann dann in einer weiteren Reaktion nochmals eingesetzt werden.

Die Reaktion wird in der Regel bei einer Temperatur von 180 bis 250 ° C durchgeführt, bevorzugt 190 bis 240 und besonders bevorzugt von 200 bis 230 ° C.

Da Maleinsäureanhydrid als Komponente (B) bei ca. 202 ° C siedet, wird die Reaktion bei Temperaturen oberhalb von 200 ° C, bevorzugt oberhalb von 190 ° C und besonders bevorzugt bereits bei Temperaturen oberhalb von 180 ° C zumindest unter Eigendruck, bevorzugt unter leichtem Überdruck durchgeführt.

Dieser Überdruck sollte mindestens 100 mbar, bevorzugt mindestens 200 mbar, besonders bevorzugt mindestens 500 mbar und insbesondere mindestens 1 bar betragen.

In der Regel sind bis zu 10 bar Überdruck ausreichend, bevorzugt bis zu 8 bar, besonders bevorzugt bis zu 7 bar und ganz besonders bevorzugt bis zu 5 bar.

Bevorzugt führt man die Reaktion unter einer Inertatmosphäre durch, besonders bevorzugt wird Stickstoff- oder Kohlendioxidatmosphäre verwendet.

Die Dauer der Reaktion sollte je nach Temperatur mindestens 15 Minuten betragen, bevorzugt mindestens 30, besonders bevorzugt mindestens 45 und ganz besonders bevorzugt mindestens 60 Minuten. Insbesondere sollte die Reaktionsdauer mindestens 2 Stunden betragen.

In der Regel und je nach Temperatur sollte die Reaktion innerhalb von 10 Stunden abgeschlossen sein, bevorzugt innerhalb von 8 und besonders bevorzugt innerhalb von 7 Stunden.

Es stellt eine mögliche Ausführungsform der vorliegenden Erfindung dar, die Reaktion ohne weiteres Lösungsmittel durchzuführen. Dies ist dann bevorzugt, wenn ein hoher Überschuß an Komponente (B) eingesetzt wird und die Reaktion in der Schmelze der flüssigen oder aufgeschmolzenen Komponente (B) durchgeführt werden kann.

In einer bevorzugten Ausführungsform wird die Reaktion jedoch in einem Lösungsmittel durchgeführt, das natürlich bevorzugt unter den Reaktionsbedingungen keine wesentliche Reaktion mit dem Polyisobuten und/oder der Komponente (B) zeigen soll. Bevorzugt handelt es sich bei dem Lösungsmittel um Kohlenwasserstoffe oder Kohlenwasserstoffgemische, Carbonsäureester, Ether oder Ketone, besonders bevorzugt um Kohlenwasserstoffe oder Kohlenwasserstoffgemische.

Als aromatische Kohlenwasserstoffgemische sind solche bevorzugt, die überwiegend aromatische $C_7$- bis $C_{14}$-Kohlenwasserstoffe umfassen und einen Siedebereich von 110 bis 300 ° C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend $C_9$ und $C_{10}$-Aromaten, Siedebereich etwa 154 - 178 ° C), 150 (Siedebereich etwa 182 - 207 ° C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Flydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 ° C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 ° C, schwer: Siedebereich etwa 225 - 300 ° C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

In einer bevorzugten Ausführungsform weist das eingesetzte Lösungsmittel einen Siedepunkt bei Normaldruck von mindestens 140 ° C auf.

Es stellt eine bevorzugte Ausführungsform der vorliegenden Erfindung dar, die Reaktion in einem Reaktor auszuführen, dessen Reaktionsvolumen zu mindestens 50% durch das flüssige Reaktionsgemisch ausgefüllt ist, bevorzugt zu mindestens 60%, besonders bevorzugt zu mindestens 66%, ganz besonders bevorzugt zu mindestens 75%, insbesondere zu mindestens 90% und speziell vollständig.

Dies hat den Vorteil, daß bei der Reaktionstemperatur der Reaktionspartner Komponente (B), bevorzugt Maleinsäureanhydrid im flüssigen Reaktionsgemisch verbleibt und nur zu einem geringen Anteil in die Gasphase ausweichen kann, so daß die Verfügbarkeit an Komponente (B) im Reaktionsgemisch erhöht wird.

In einer weiteren bevorzugten Ausführungsform ist der besagte Reaktor rückvermischungsarm oder rückvermischungsfrei. Diese Fördercharakteristik ist durch eine Bodensteinzahl von mindestens 3, bevorzugt mindestens 5, besonders bevorzugt mindestens 7 gekennzeichnet.

Optional können dem Reaktionsgemisch Stabilisatoren zur Unterbindung von Nebenreaktionen zugesetzt werden, bevorzugt solche wie beschrieben in EP 156310 A2.

Bei diesen Zusatzstoffen handelt es sich um Alkoxide, bevorzugt die $C_2$- bis $C_4$-Alkoxide, des Titans, Zirkons, Vanadins oder Aluminiums. Derartige Verbindungen sind an sich bekannt und verfügbar. Insbesondere geeignete Alkoxide sind die Verbindungen: Titan(IV)butoxid = $Ti(C_4H_9O)_4$, Titan(IV)i-butoxid = $Ti[(CH_3)_2CHCH_2O]_4$, Titan(IV)ethoxid = $Ti(C_2H_5O)_4$, Titan(IV)i-propoxid = $Ti(OC_3H_7)_4$, Titan(IV)n-propoxid = $Ti(C_3H_7O)4$, Zirkon n-butoxid-Butanolkomplex = $(C_4H_1O)_4Zr{\cdot}C_4H_9OH$, Zirkon-i-propoxid = $Zr(OC_3H_7)$ = $C_3H_7OH$, Zirkon-n-propoxid = $Zr(OC_3H_7)_4$, Vanadin(V)tri-n-butoxid-oxid = $VO(OC_4H_9)_3$, Vanadin(V)triethoxid-oxid = $VO(OC_2H_5)_3$, Vanadin(V)tri-i-propoxidoxid = $VO(OC_3H_7)_3$, Vanadin(V)tris-n-propoxid-oxid = $VO(OC_3H_7)_3$, Aluminium-i-butoxid = $Al(OC_4H_9)_3$, Aluminium-n-butoxid = $Al(OC_4H_9)_3$, Aluminium-s-butoxid = $Al(OC_4H_9)_3$, Aluminium-t-butoxid = $Al(OC_4H_9)_3$ oder Aluminium-i-propoxid = $Al(OC_3R_7)_3$.

Die erwähnten Alkoxide liegen in flüssigem Zustand, gegebenenfalls als Komplexverbindung mit dem entsprechenden Alkohol, vor und werden in dieser Form bei der erfindungsgemäßen Reaktion verwendet. Sie werden mit einem Reinheitsgrad von 95 bis 99 Gew.%, bei den Alkoxiden des Aluminiums von 90 bis 99 Gew.%, eingesetzt. Die zu verwendenden Alkoxide sind in der Reaktionsmischung löslich.

Die Stabilisatoren werden in Mengen von 1 bis 5000, bevorzugt 5 bis 1000 Gew.-ppm, besonders bevorzugt 10 bis 500 Gew.ppm, ganz besonders bevorzugt 25 bis 300 Gew.ppm bezogen auf das eingesetzte Olefin eingesetzt.

In einer bevorzugten Ausführungsform werden in dem erfindungsgemäßen Verfahren keine weiteren Stabilisatoren eingesetzt.

Bei der hier exemplarisch gezeigten Umsetzung von Polyisobuten Homopolymer mit Maleinsäureanhydrid können sich, insbesondere bei höheren Molverhältnissen von Maleinsäureanhydrid zu Polyisobuten, als Folgeprodukte Verbindungen bilden, die mehr als eine Bernsteinsäureanhydridgruppe pro Polymer tragen. Diese Produkte haben ausgehend von $\alpha$ - bzw. $\beta$-Doppelbindungen unterschiedliche Strukturen:

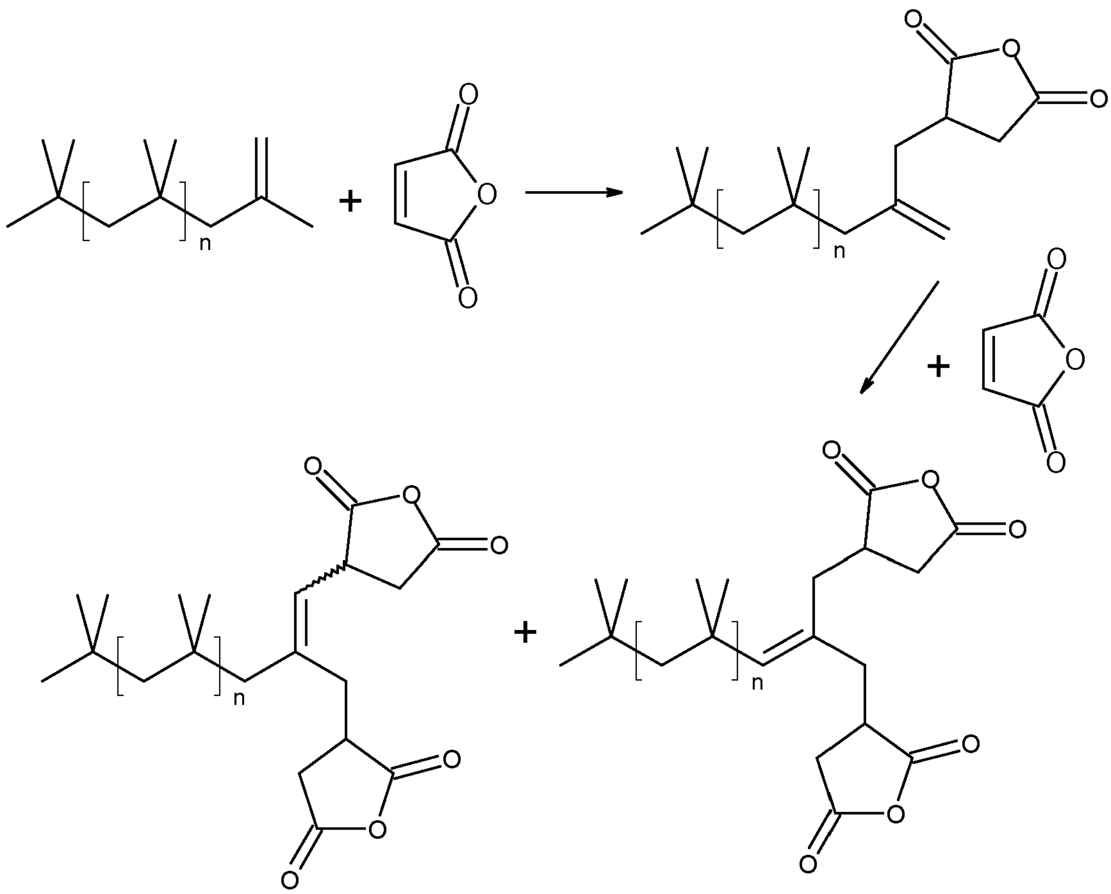

Bzw.

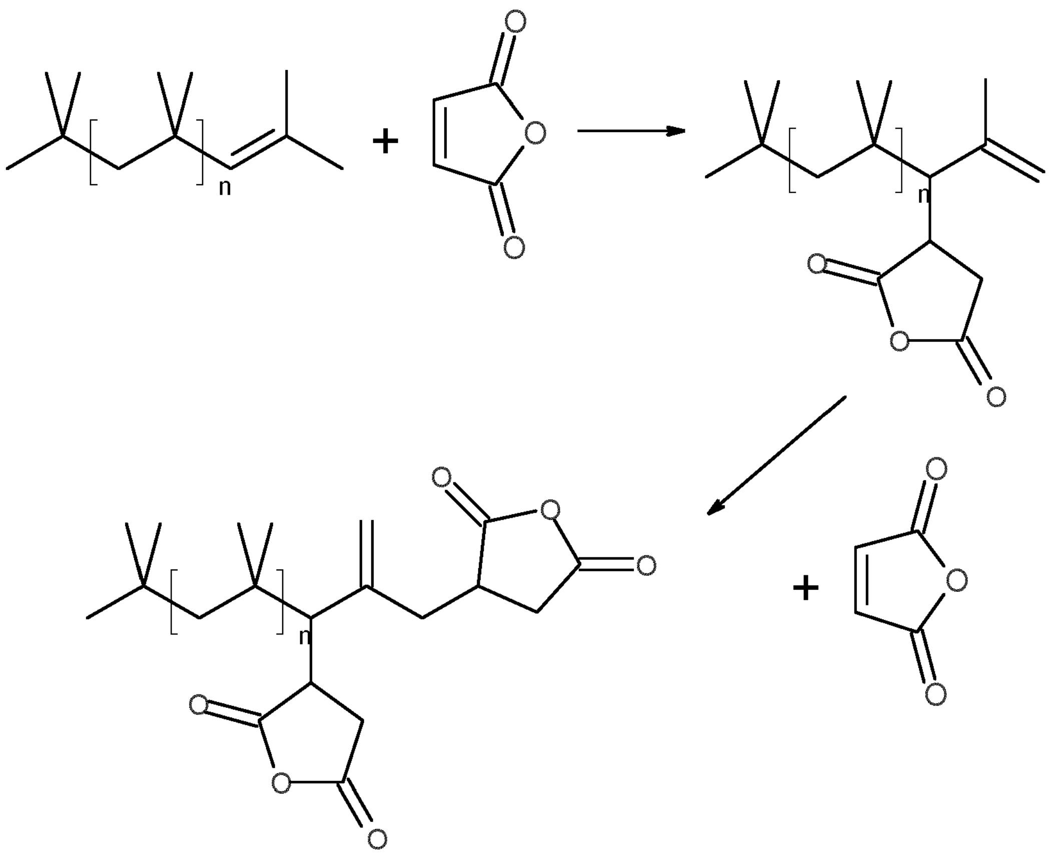

In diesen Reaktionsschemata steht n für eine natürliche Zahl von 2 bis 39, bevorzugt von 3 bis 34, besonders bevorzugt von 4 bis 25, ganz besonders bevorzugt von 5 bis 19 und insbesondere von 6 bis 16.

Das Verhältnis der höher zu den einfach maleinierten Komponenten zueinander kann durch den "Bismaleinierungsgrad" (BMG) angegeben werden. Der BMG ist an sich bekannt (Siehe auch US 5,883,196) und kann nach folgender Formel bestimmt werden:

$$BMG = 100\% \times [(wt\text{-}\%(BM\ PIBSA)/(wt\text{-}\%(BM\ PIBSA)+wt\text{-}\%(PIBSA))]$$

wobei wt-%(X) für den jeweiligen Gewichtsanteil der Komponente X (X = PIBSA (einfach maleiniertes Polyisobuten) oder BM PIBSA (mehr als einfach maleiniertes Polyisobuten)) im Umsetzungsprodukt von Polyisobuten mit Maleinsäureanhydrid steht.

Berechnet wird der Bismaleinierungsgrad bevorzugt aus der Verseifungszahl gemäß DIN 53401: 1988-06 der Probe. Dabei muß die Probe gegebenenfalls mit einem geeigneten Lösungsmittel solubilisiert werden, bevorzugt in einem 2:1 Gemisch aus Toluol und Ethanol.

Dabei ist zu beachten, daß lediglich das Verhältnis der höher maleinierten Komponenten zu den einfach maleinierten Komponenten einbezogen wird, wohingegen im Reaktionsgemisch befindliches unumgesetztes Polyisobuten, beispielsweise solches, das keine reaktiven Doppelbindungen enthält, nicht in die Bestimmung des Bismaleinierungsgrades eingeht. Mithin kann das Reaktionsgemisch auch noch unumgesetztes Polyisobuten enthalten, was meist dem Anteil im eingesetzten Polyisobuten entspricht, der keine reaktiven Doppelbindungen enthält, wohingegen der reaktive Doppelbindungen enthaltende Anteil im Polyisobuten bevorzugt vollständig oder nahezu vollständig abreagiert.

Der Anteil an im Reaktionsgemisch befindlichen, unumgesetztem Polyisobuten entspricht daher in der Regel dem oben angegebenen bis zu 100 fehlenden Anteil an reaktiven Doppelbindungen in den erfindungsgemäß einsetzbaren Isobutenhomo- oder -copolymeren.

Der Anteil an unumgesetztem Polyisobuten beträgt bevorzugt nicht mehr als 30 Gew%, besonders bevorzugt nicht mehr als 25 Gew%, ganz besonders bevorzugt nicht mehr als 20 Gew%, insbesondere nicht mehr als 15 Gew% und speziell nicht mehr als 10 Gew%.

Zur Bestimmung des Anteils an maleinierten Komponenten im Verhältnis zum unumgesetzten Polyisobuten wird das Reaktionsgemisch in n-Heptan gelöst und auf eine Säule mit Kieselgel 60 aufgebracht und mit n-Heptan eluiert,

bis kein Produkt mehr im Eluat auftritt. Mit Hilfe einer Säulenchromatographie wird das unumgesetzten Polyisobuten von den maleinierten Komponenten getrennt, da die maleinierten Komponenten nicht eluiert werden. Nach Abtrennung des Lösungsmittels durch Destillation wird durch Abwiegen der Gewichtsanteil an maleinierten Komponenten im Reaktionsgemisch bestimmt.

Die obige Formel kann analog auch auf andere Komponenten (B) als Maleinsäureanhydrid angewendet werden und wird hier auch für andere Komponenten (B) als Maleinsäureanhydrid einfachheitshalber ebenfalls als Bismaleinierungsgrad bezeichnet. Allgemein formuliert steht der Bismaleininerungsgrad also für den Gewichtsanteil von solchen Produkten, die mehr als eine Verbindung (B) pro Polyisobutenkette tragen im Verhältnis zur Gesamtmenge von Produkten, die eine oder mehr als eine Verbindung (B) pro Polyisobutenkette tragen, wobei nur solche Polyisobutenketten in die Bestimmung einbezogen werden, die reaktive Doppelbindungen tragen.

Gegenstand der erfindungsgemäßen Verwendung sind freie Säuregruppen tragenden Umsetzungsprodukte von Polyisobuten, deren Bismaleinierungsgrad mindestens 11% und speziell mindestens 12% beträgt.

Der Bismaleinierungsgrade kann bis zu 40% betragen.

Die besten Ergebnisse werden erzielt bei einem Bismaleinierungsgrad von 11 bis 40%, bevorzugt 12 bis 35% und besonders bevorzugt 15 bis 30%.

Aus dem Reaktionsprodukt der Komponenten (A) und (B) kann nach Beendigung der Reaktion (Reaktionsschritt (I)) bevorzugt überschüssige und unumgesetzte Komponente (B) abgetrennt werden, bevorzugt per Destillation oder Sublimation, denkbar ist aber auch beispielsweise eine Extraktion. Das so erhaltene Reaktionsgemisch wird dann zur Erfüllung der erfindungsgemäßen Maßgabe einer Hydrolyse bzw. Verseifung (Reaktionsschritt (II)) unterworfen, wenn es sich bei der Komponente (B) um ein Anhydrid bzw. einen Alkylester handelt:
Eine Hydrolyse in Reaktionsschritt (II) wird dann durchlaufen, wenn als Derivat des Monomers (A) ein Anhydrid, bevorzugt das Anhydrid einer Dicarbonsäure eingesetzt wird, wohingegen bei Einsatz eines Esters als Monomer (A) eine Verseifung bzw. Hydrolyse durchlaufen werden kann.

Für eine Hydrolyse wird bezogen auf die enthaltenen Anhydridfunktionalitäten die Menge Wasser hinzugegeben, die dem gewünschten Hydrolysegrad entspricht und das aus (I) erhaltene Reaktionsprodukt in Gegenwart des zugegebenen Wassers erwärmt. In der Regel ist dafür eine Temperatur von vorzugsweise 20 bis 150° C ausreichend, bevorzugt 60 bis 100° C. Falls erforderlich kann die Reaktion unter Druck durchgeführt werden, um das Entweichen von Wasser zu verhindern. Unter diesen Reaktionsbedingungen werden in der Regel selektiv die Anhydridfunktionalitäten im Reaktionsprodukt umgesetzt, wohingegen etwaige im Reaktionsprodukt enthaltene Carbonsäureesterfunktionalitäten nicht oder zumindest nur untergeordnet reagieren.

Für eine Verseifung wird das Reaktionsprodukt mit einer Menge einer starken Base in Gegenwart von Wasser umgesetzt, die dem gewünschten Verseifungsgrad entspricht.

Als starke Basen können bevorzugt Hydroxide, Oxide, Carbonate oder Hydrogencarbonate von Alkali- oder Erdalkalimetallen eingesetzt werden.

Das aus (I) erhaltene Reaktionsprodukt wird dann, bevorzugt nach Abtrennung von überschüssiger Verbindung (B), in Gegenwart des zugegebenen Wassers und der starken Base erwärmt. In der Regel ist dafür eine Temperatur von vorzugsweise 20 bis 130° C ausreichend, bevorzugt 50 bis 110° C. Falls erforderlich kann die Reaktion unter Druck durchgeführt werden.

Es ist auch möglich, die Carbonsäureesterfunktionalitäten mit Wasser in Gegenwart einer Säure zu hydrolysieren. Als Säuren werden dabei bevorzugt Mineral-, Carbon-, Sulfon- oder phosphorhaltige Säuren mit einem pKs-Wert von nicht mehr als 5, besonders bevorzugt nicht mehr als 4 eingesetzt.

Beispiele sind Essigsäure, Ameisensäure, Oxalsäure, Salicylsäure, substituierte Bernsteinsäuren, am Aromaten substituierte oder unsubstituierte Benzolsulfonsäuren, Schwefelsäure, Salpetersäure, Salzsäure oder Phosphorsäure, denkbar ist auch der Einsatz von sauren Ionentauscherharzen.

Das aus (I) erhaltene Reaktionsprodukt wird dann, bevorzugt nach Abtrennung von überschüssiger Verbindung (B), in Gegenwart des zugegebenen Wassers und der Säure erwärmt. In der Regel ist dafür eine Temperatur von vorzugsweise 40 bis 200° C ausreichend, bevorzugt 80 bis 150° C. Falls erforderlich kann die Reaktion unter Druck durchgeführt werden.

Sollten die aus Schritt (II) erhaltenen Reaktionsprodukt noch Reste von Säureanionen enthalten, so kann es bevorzugt sein, diese Säureanionen mit Hilfe eines Ionentauschers aus dem Produkt zu entfernen und bevorzugt gegen Hydroxidionen oder Carboxylationen, besonders bevorzugt Hydroxidionen auszutauschen. Dies ist insbesondere dann der Fall, wenn die im Produkt enthaltenen Säureanionen Halogenide, schwefelhaltig oder stickstoffhaltig sind.

Verwendung

Die erfindungsgemäße Verwendung betrifft die Inhibierung der Korrosion von Eisen-, Stahl- und/oder Buntmetalloberflächen.

Unter den Buntmetallen sind dabei Kupfer und dessen Legierungen bevorzugt.

Besonders bevorzugt wird die Korrosion von Stahloberflächen inhibiert.

Die beschriebenen freie Säuregruppen tragende Umsetzungsprodukte von Polyisobuten werden Kraftstoffen mit dem oben spezifizierten Gehalt an Alkali- und/oder Erdalkalimetallen und/oder Zink in der Regel in Mengen von 1 bis 60, bevorzugt 4 bis 50 Gew. ppm und besonders bevorzugt von 10 bis 40 Gew. ppm zugesetzt.

Häufig werden die beschriebenen freie Säuregruppen tragende Umsetzungsprodukte von Polyisobuten in Form von Kraftstoffadditivgemischen eingesetzt, zusammen mit üblichen Additiven:

Im Falle von Dieselkraftstoffen sind dies in erster Linie übliche Detergenz-Additive, Trägeröle, Kaltfließverbesserer, Schmierfähigkeitsverbesserer (Lubricity Improver), andere Korrosionsinhibitoren als die beschriebenen freie Säuregruppen tragende Umsetzungsprodukte von Polyisobuten, Demulgatoren, Dehazer, Antischaummittel, Cetanzahlverbesserer, Verbrennungsverbesserer, Antioxidantien oder Stabilisatoren, Antistatika, Metallocene, Metalldeaktivatoren, Farbstoffe und/oder Lösungsmittel.

Im Falle von Ottokraftstoffen sind dies vor allem Schmierfähigkeitsverbesserer (Friction Modifier), andere Korrosionsinhibitoren als die beschriebenen freie Säuregruppen tragende Umsetzungsprodukte von Polyisobuten, Demulgatoren, Dehazer, Antischaummittel, Verbrennungsverbesserer, Antioxidantien oder Stabilisatoren, Antistatika, Metallocene, Metalldeaktivatoren, Farbstoffe und/oder Lösungsmittel.

Typische Beispiele geeigneter Co-Additive sind im folgenden Abschnitt aufgeführt:

B1) Detergenz-Additive

Vorzugsweise handelt es sich bei den üblichen Detergenz-Additiven um amphiphile Substanzen, die mindestens einen hydrophoben Kohlenwasserstoffrest mit einem zahlengemittelten Molekulargewicht ($M_n$) von 85 bis 20.000 und mindestens eine polare Gruppierung besitzen, die ausgewählt ist unter:

(Da) Mono- oder Polyaminogruppen mit bis zu 6 Stickstoffatomen, wobei mindestens ein Stickstoffatom basische Eigenschaften hat;

(Db) Nitrogruppen, gegebenenfalls in Kombination mit Hydroxylgruppen;

(Dc) Hydroxylgruppen in Kombination mit Mono- oder Polyaminogruppen, wobei mindestens ein Stickstoffatom basische Eigenschaften hat;

(Dd) Carboxylgruppen oder deren Alkalimetall- oder Erdalkalimetallsalzen;

(De) Sulfonsäuregruppen oder deren Alkalimetall- oder Erdalkalimetallsalzen;

(Df) Polyoxy-$C_2$- bis $C_4$-alkylengruppierungen, die durch Hydroxylgruppen, Mono- oder Polyaminogruppen, wobei mindestens ein Stickstoffatom basische Eigenschaften hat, oder durch Carbamatgruppen terminiert sind;

(Dg) Carbonsäureestergruppen;

(Dh) aus Bernsteinsäureanhydrid abgeleiteten Gruppierungen mit Hydroxy- und/oder Amino- und/oder Amido- und/oder Imidogruppen; und/oder

(Di) durch Mannich-Umsetzung von substituierten Phenolen mit Aldehyden und Mono- oder Polyaminen erzeugten Gruppierungen.

Der hydrophobe Kohlenwasserstoffrest in den obigen Detergenz-Additiven, welcher für die ausreichende Löslichkeit im Kraftstoff sorgt, hat ein zahlengemitteltes Molekulargewicht ($M_n$) von 85 bis 20.000, vorzugsweise von 113 bis 10.000, besonders bevorzugt von 300 bis 5.000, stärker bevorzugt von 300 bis 3.000, noch stärker bevorzugt von 500 bis 2.500 und insbesondere von 700 bis 2.500, vor allem von 800 bis 1500. Als typischer hydrophober Kohlenwasserstoffrest, insbesondere in Verbindung mit den polaren insbesondere Polypropenyl-, Polybutenyl- und Polyisobutenylreste mit einem zahlenmittleren Molekulargewicht $M_n$ von vorzugsweise jeweils 300 bis 5.000, besonders bevorzugt 300 bis 3.000, stärker bevorzugt 500 bis 2.500 noch stärker bevorzugt 700 bis 2.500 und insbesondere 800 bis 1.500 in Betracht.

Als Beispiele für obige Gruppen von Detergenz-Additiven seien die folgenden genannt:

Mono- oder Polyaminogruppen (Da) enthaltende Additive sind vorzugsweise Polyalkenmono- oder Polyalkenpolyamine auf Basis von Polypropen oder von hochreaktivem (d.h. mit überwiegend endständigen Doppelbindungen) oder konventionellem (d.h. mit überwiegend mittenständigen Doppelbindungen) Polybuten oder Polyisobuten mit $M_n$ = 300 bis

5000, besonders bevorzugt 500 bis 2500 und insbesondere 700 bis 2500. Derartige Additive auf Basis von hochreaktivem Polyisobuten, welche aus dem Polyisobuten, das bis zu 20 Gew.-% n-Buten-Einheiten enthalten kann, durch Hydroformylierung und reduktive Aminierung mit Ammoniak, Monoaminen oder Polyaminen wie Dimethyl-aminopropylamin, Ethylendiamin, Diethylentriamin, Triethylentetramin oder Tetraethylenpentamin hergestellt werden können, sind insbesondere aus der EP-A 244 616 bekannt. Geht man bei der Herstellung der Additive von Polybuten oder Polyisobuten mit überwiegend mittenständigen Doppelbindungen (meist in der β- und γ-Position) aus, bietet sich der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier Amine, wie z. B. Ammoniak, Monoamine oder die oben genannten Polyamine, eingesetzt werden. Entsprechende Additive auf Basis von Polypropen sind insbesondere in der WO-A 94/24231 beschrieben.

Weitere besondere Monoaminogruppen (Da) enthaltende Additive sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in der WO-A 97/03946 beschrieben sind.

Weitere besondere Monoaminogruppen (Da) enthaltende Additive sind die aus Poly-isobutenepoxiden durch Umsetzung mit Aminen und nachfolgender Dehydratisierung und Reduktion der Aminoalkohole erhältlichen Verbindungen, wie sie insbesondere in der DE-A 196 20 262 beschrieben sind.

Nitrogruppen (Db), gegebenenfalls in Kombination mit Hydroxylgruppen, enthaltende Additive sind vorzugsweise Umsetzungsprodukte aus Polyisobutenen des mittleren Polymerisationsgrades P = 5 bis 100 oder 10 bis 100 mit Stickoxiden oder Gemischen aus Stickoxiden und Sauerstoff, wie sie insbesondere in der WO-A96/03367 und in der WO-A 96/03479 beschrieben sind. Diese Umsetzungsprodukte stellen in der Regel Mischungen aus reinen Nitropolyisobutenen (z. B. $\alpha,\beta$-Dinitropolyisobuten) und gemischten Hydroxynitropolyisobutenen (z. B. $\alpha$-Nitro-β-hydroxypolyisobuten) dar.

Hydroxylgruppen in Kombination mit Mono- oder Polyaminogruppen (Dc) enthaltende Additive sind insbesondere Umsetzungsprodukte von Polyisobutenepoxiden, erhältlich aus vorzugsweise überwiegend endständige Doppelbindungen aufweisendem Polyisobuten mit $M_n$ = 300 bis 5000 mit Ammoniak, Mono- oder Polyaminen, wie sie insbesondere in der EP-A 476 485 beschrieben sind.

Carboxylgruppen oder deren Alkalimetall- oder Erdalkalimetallsalze (Dd) enthaltende Additive sind vorzugsweise Copolymere von $C_2$- bis $C_{40}$-Olefinen mit Maleinsäureanhydrid mit einer Gesamt-Molmasse von 500 bis 20.000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind. Solche Additive sind insbesondere aus der EP-A 307 815 bekannt. Derartige Additive dienen hauptsächlich zur Verhinderung von Ventilsitzverschleiß und können, wie in der WO-A 87/01126 beschrieben, mit Vorteil in Kombination mit üblichen Kraftstoffdetergenzien wie Poly(iso)-butenaminen oder Polyetheraminen eingesetzt werden.

Sulfonsäuregruppen oder deren Alkalimetall- oder Erdalkalimetallsalze (De) enthaltende Additive sind vorzugsweise Alkalimetall- oder Erdalkalimetallsalze eines Sulfobern-steinsäurealkylesters, wie er insbesondere in der EP-A 639 632 beschrieben ist. Derartige Additive dienen hauptsächlich zur Verhinderung von Ventilsitzverschleiß und können mit Vorteil in Kombination mit üblichen Kraftstoffdetergenzien wie Poly(iso)buten-aminen oder Polyetheraminen eingesetzt werden.

Polyoxy-$C_2$-$C_4$-alkylengruppierungen (Df) enthaltende Additive sind vorzugsweise Polyether oder Polyetheramine, welche durch Umsetzung von $C_2$- bis $C_{60}$-Alkanolen, $C_6$- bis $C_{30}$-Alkandiolen, Mono- oder Di-$C_2$- bis $C_{30}$-alkylaminen, $C_1$- bis $C_{30}$-Alkylcyclo-hexanolen oder $C_1$- bis $C_{30}$-Alkylphenolen mit 1 bis 30 mol Ethylenoxid und/oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in der EP-A 310 875, EP-A 356 725, EP-A 700 985 und US-A 4 877 416 beschrieben. Im Falle von Polyethern erfüllen solche Produkte auch Trägeröleigenschaften. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Carbonsäureestergruppen (Dg) enthaltende Additive sind vorzugsweise Ester aus Mo-no-, Di- oder Tricarbonsäuren mit langkettigen Alkanolen oder Polyolen, insbesondere solche mit einer Mindestviskosität von 2 $mm^2/s$ bei 100 ° C, wie sie insbesondere in der DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des iso-Octanols, iso-Nonanols, isoDecanols und des iso-Tridecanols. Derartige Produkte erfüllen auch Trägeröleigenschaften.

Aus Bernsteinsäureanhydrid abgeleitete Gruppierungen mit Hydroxy- und/oder Amino- und/oder Amido- und/oder insbesondere Imidogruppen (Dh) enthaltende Additive sind vorzugsweise entsprechende Derivate von Alkyl- oder Alkenyl-substituiertem Bernsteinsäureanhydrid und insbesondere die entsprechenden Derivate von Polyisobutenylbernsteinsäureanhydrid, welche durch Umsetzung von konventionellem oder hochreaktivem Polyisobuten mit $M_n$ =

vorzugsweise 300 bis 5000, besonders bevorzugt 300 bis 3000, stärker bevorzugt 500 bis 2500, noch stärker bevorzugt 700 bis 2500 und insbesondere 800 bis 1500, mit Maleinsäureanhydrid auf thermischem Weg in einer En-Reaktion oder über das chlorierte Polyisobuten erhältlich sind. Bei den Gruppierungen mit Hydroxy- und/oder Amino- und/oder Amido- und/oder Imidogruppen handelt es sich beispielsweise um Carbonsäuregruppen, Säureamide von Monoaminen, Säureamide von Di- oder Polyaminen, die neben der Amidfunktion noch freie Amingruppen aufweisen, Bernsteinsäurederivate mit einer Säure- und einer Amidfunktion, Carbonsäureimide mit Monoaminen, Carbonsäureimide mit Di- oder Polyaminen, die neben der Imidfunktion noch freie Amingruppen aufweisen, oder Diimide, die durch die Umsetzung von Di- oder Polyaminen mit zwei Bernsteinsäurederivaten gebildet werden. Derartige Kraftstoffadditive sind allgemein bekannt und beispielsweise in den Dokumenten (1) und (2) beschrieben. Bevorzugt handelt es sich um die Umsetzungsprodukte von Alkyl- oder Alkenylsubstituierten Bernsteinsäuren oder Derivaten davon mit Aminen und besonders bevorzugt um die Umsetzungsprodukte von Polyisobutenyl-substituierten Bernsteinsäuren oder Derivaten davon mit Aminen. Von besonderem Interesse sind hierbei Umsetzungsprodukte mit aliphatischen Polyaminen (Polyalkylenimine) wie insbesondere Ethylendiamin, Diethylentriamin, Triethylentetramin, Tetraethylenpentamin, Pentaethylenhexamin und Hexaethylenheptamin, welche eine Imidstruktur aufweisen.

Durch Mannich-Umsetzung von substituierten Phenolen mit Aldehyden und Mono- oder Polyaminen erzeugte Gruppierungen (Di) enthaltende Additive sind vorzugsweise Umsetzungsprodukte von Polyisobuten-substituierten Phenolen mit Formaldehyd und Mono- oder Polyaminen wie Ethylendiamin, Diethylentriamin, Triethylentetramin, Tetraethylenpentamin oder Dimethylaminopropylamin. Die Polyisobutenyl-substituierten Phenole können aus konventionellem oder hochreaktivem Polyisobuten mit $M_n$ = 300 bis 5000 stammen. Derartige "Polyisobuten-Mannichbasen" sind insbesondere in der EP-A 831 141 beschrieben.

Dem Kraftstoff können ein oder mehrere der genannten Detergenz-Additive in solch einer Menge zugegeben werden, dass die Dosierrate an diesen Detergenz-Additiven vozugsweise 25 bis 2500 Gew.-ppm, insbesondere 75 bis 1500 Gew.-ppm, vor allem 150 bis 1000 Gew.-ppm, beträgt.

B2) Trägeröle

Mitverwendete Trägeröle können mineralischer oder synthetischer Natur sein. Geeignete mineralische Trägeröle sind bei der Erdölverarbeitung anfallende Fraktionen, wie Brightstock oder Grundöle mit Viskositäten wie beispielsweise aus der Klasse SN 500 bis 2000, aber auch aromatische Kohlenwasserstoffe, paraffinische Kohlenwasserstoffe und Alkoxyalkanole. Brauchbar ist ebenfalls eine als "hydrocrack oil" bekannte und bei der Raffination von Mineralöl anfallende Fraktion (Vakuumdestillatschnitt mit einem Siedebereich von etwa 360 bis 500 ° C, erhältlich aus unter Hochdruck katalytisch hydriertem und isomerisiertem sowie entparaffiniertem natürlichen Mineralöl). Ebenfalls geeignet sind Mischungen oben genannter mineralischer Trägeröle.

Beispiele für geeignete synthetische Trägeröle sind Polyolefine (Polyalphaolefine oder Polyinternalolefine), (Poly)ester, Poly)alkoxylate, Polyether, aliphatische Polyetheramine, alkylphenolgestartete Polyether, alkylphenolgestartete Polyetheramine und Carbonsäureester langkettiger Alkanole.

Beispiele für geeignete Polyolefine sind Olefinpolymerisate mit $M_n$ = 400 bis 1800, vor allem auf Polybuten- oder Polyisobuten-Basis (hydriert oder nicht hydriert).

Beispiele für geeignete Polyether oder Polyetheramine sind vorzugsweise Polyoxy-$C_2$- bis $C_4$-alkylengruppierungen enthaltende Verbindungen, welche durch Umsetzung von $C_2$- bis $C_{60}$-Alkanolen, $C_6$- bis $C_{30}$-Alkandiolen, Mono- oder Di-$C_2$- bis $C_{30}$-alkylaminen, $C_1$- bis $C_{30}$-Alkyl-cyclohexanolen oder $C_1$- bis $C_{30}$-Alkylphenolen mit 1 bis 30 mol Ethylenoxid und/ oder Propylenoxid und/oder Butylenoxid pro Hydroxylgruppe oder Amino-gruppe und, im Falle der Polyetheramine, durch anschließende reduktive Aminierung mit Ammoniak, Monoaminen oder Polyaminen erhältlich sind. Derartige Produkte werden insbesondere in der EP-A 310 875, EP-A 356 725, EP-A 700 985 und der US-A 4,877,416 beschrieben. Beispielsweise können als Polyetheramine Poly-$C_2$- bis $C_6$-Alkylenoxidamine oder funktionelle Derivate davon verwendet werden. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Beispiele für Carbonsäureester langkettiger Alkanole sind insbesondere Ester aus Mono-, Di- oder Tricarbonsäuren mit langkettigen Alkanolen oder Polyolen, wie sie insbesondere in der DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 Kohlenstoffatomen. Typische Vertreter der Ester sind Adipate, Phthalate, iso-Phthalate, Terephthalate und Trimellitate des Isooctanols, Isononanols, Isodecanols und des Iso-tridecanols, z. B. Di-(n- oder Isotridecyl)phthalat.

Weitere geeignete Trägerölsysteme sind beispielsweise in der DE-A 38 26 608, DE-A 41 42 241, DE-A 43 09 074, EP-A 452 328 und der EP-A 548 617 beschrieben.

Beispiele für besonders geeignete synthetische Trägeröle sind alkoholgestartete Polyether mit etwa 5 bis 35, vorzugsweise etwa 5 bis 30, besonders bevorzugt 10 bis 30 und insbesondere 15 bis 30 $C_3$- bis $C_6$-Alkylenoxideinheiten, z. B.

Propylenoxid-, n-Butylenoxid- und Isobutylenoxid-Einheiten oder Gemischen davon, pro Alkoholmolekül. Nichtlimitierende Beispiele für geeignete Starteralkohole sind langkettige Alkanole oder mit langkettigem Alkylsubstituierte Phenole, wobei der langkettige Alkylrest insbesondere für einen geradkettigen oder verzweigten $C_6$- bis $C_{18}$-Alkylrest steht. Als besondere Beispiele sind zu nennen Tridecanol und Nonylphenol. Besonders bevorzugte alkoholgestartete Polyether sind die Umsetzungsprodukte (Polyveretherungsprodukte) von einwertigen aliphatischen $C_6$- bis $C_{18}$-Alkoholen mit $C_3$- bis $C_6$-Alkylenoxiden. Beispiele für einwertige aliphatische $C_6$-$C_{18}$-Alkohole sind Hexanol, Heptanol, Octanol, 2-Ethylhexanol, Nonylalkohol, Decanol, 3-Propylheptanol, Undecanol, Dodecanol, Tridecanol, Tetradecanol, Pentadecanol, Hexadecanol, Octadecanol und deren Konstitutions- und Stellungsisomere. Die Alkohole können sowohl in Form der reinen Isomere als auch in Form technischer Gemische eingesetzt werden. Ein besonders bevorzugter Alkohol ist Tridecanol. Beispiele für $C_3$- bis $C_6$-Alkylenoxide sind Propylenoxid, wie 1,2-Propylen-oxid, Butylenoxid, wie 1,2-Butylenoxid, 2,3-Butylenoxid, Isobutylenoxid oder Tetrahydrofuran, Pentylenoxid und Hexylenoxid. Besonders bevorzugt sind hierunter $C_3$- bis $C_4$-Alkylenoxide, d.h. Propylenoxid wie 1,2-Propylenoxid und Butylenoxid wie 1,2-Buty-lenoxid, 2,3-Butylenoxid und Isobutylenoxid. Speziell verwendet man Butylenoxid.

Weitere geeignete synthetische Trägeröle sind alkoxylierte Alkylphenole, wie sie in der DE-A 10 102 913 beschrieben sind.

Besondere Trägeröle sind synthetische Trägeröle, wobei die zuvor beschriebenen al-koholgestarteten Polyether besonders bevorzugt sind.

Das Trägeröl bzw. das Gemisch verschiedener Trägeröle wird dem Kraftstoff in einer Menge von vorzugsweise 1 bis 1000 Gew.-ppm, besonders bevorzugt von 10 bis 500 Gew.-ppm und insbesondere von 20 bis 100 Gew.-ppm zugesetzt.

B3) Kaltfließverbesserer

Geeignete Kaltfließverbesserer sind im Prinzip alle organischen Verbindungen, welche in der Lage sind, das Fließverhalten von Mitteldestillat-Kraftstoffen bzw. Dieselkraftstoffen in der Kälte zu verbessern. Zweckmäßigerweise müssen sie eine ausreichende Öllöslichkeit aufweisen. Insbesondere kommen hierfür die üblicherweise bei Mitteldestillaten aus fossilem Ursprung, also bei üblichen mineralischen Dieselkraftstoffen, eingesetzten Kaltfließverbesserer ("middle distillate flow improvers", "MDFI") in Betracht. Jedoch können auch organische Verbindungen verwendet werden, die beim Einsatz in üblichen Dieselkraftstoffen zum Teil oder überwiegend die Eigenschaften eines Wax Anti-Settling Additivs ("WASA") aufweisen. Auch können sie zum Teil oder überwiegend als Nukleatoren wirken. Es können aber auch Mischungen aus als MDFI wirksamen und/oder als WASA wirksamen und/oder als Nukleatoren wirksamen organischen Verbindungen eingesetzt werden.

Typischerweise wird der Kaltfließverbesserer ausgewählt aus:

- (K1) Copolymeren eines $C_2$- bis $C_{40}$-Olefins mit wenigstens einem weiteren ethylenisch ungesättigten Monomer;
- (K2) Kammpolymeren;
- (K3) Polyoxyalkylenen;
- (K4) polaren Stickstoffverbindungen;
- (K5) Sulfocarbonsäuren oder Sulfonsäuren oder deren Derivaten; und
- (K6) Poly(meth)acrylsäureestern.

Es können sowohl Mischungen verschiedener Vertreter aus einer der jeweiligen Klassen (K1) bis (K6) als auch Mischungen von Vertretern aus verschiedenen Klassen (K1) bis (K6) eingesetzt werden.

Geeignete $C_2$- bis $C_{40}$-Olefin-Monomere für die Copolymeren der Klasse (K1) sind beispielsweise solche mit 2 bis 20, insbesondere 2 bis10 Kohlenstoffatomen sowie mit 1 bis 3, vorzugsweise mit 1 oder 2, insbesondere mit einer Kohlenstoff-Kohlenstoff-Dop-pelbindung. Im zuletzt genannten Fall kann die Kohlenstoff-Kohlenstoff-Doppelbindung sowohl terminal ($\alpha$-Olefine) als auch intern angeordnet sein kann. Bevorzugt sind jedoch $\alpha$-Olefine, besonders bevorzugt $\alpha$-Olefine mit 2 bis 6 Kohlenstoffatomen, beispielsweise Propen, 1-Buten, 1-Penten, 1-Hexen und vor allem Ethylen.

Bei den Copolymeren der Klasse (K1) ist das wenigstens eine weitere ethylenisch ungesättigte Monomer vorzugsweise ausgewählt unter Carbonsäurealkenylestern, (Meth)Acrylsäureestern und weiteren Olefinen.

Werden weitere Olefine mit einpolymerisiert, sind dies vorzugsweise höhermolekulare als das oben genannte $C_2$- bis $C_{40}$-Olefin-Basismonomere. Setzt man beispielsweise als Olefin-Basismonomer Ethylen oder Propen ein, eignen sich als weitere Olefine insbesondere $C_{10}$- bis $C_{40}$- $\alpha$-Olefine. Weitere Olefine werden in den meisten Fällen nur dann mit einpolymerisiert, wenn auch Monomere mit Carbonsäureester-Funktionen eingesetzt werden.

Geeignete (Meth)Acrylsäureester sind beispielsweise Ester der (Meth)Acrylsäure mit $C_1$- bis $C_{20}$-Alkanolen, insbesondere $C_1$- bis $C_{10}$-Alkanolen, vor allem mit Methanol, Ethanol, Propanol, Isopropanol, n-Butanol, sec.-Butanol, Isobutanol, tert.-Butanol, Pentanol, Hexanol, Heptanol, Octanol, 2-Ethylhexanol, Nonanol und Decanol sowie Strukturisomeren hiervon.

Geeignete Carbonsäurealkenylester sind beispielsweise $C_2$- bis $C_{14}$-Alkenylester, z.B. die Vinyl- und Propenylester, von Carbonsäuren mit 2 bis 21 Kohlenstoffatomen, deren Kohlenwasserstoffrest linear oder verzweigt sein kann. Bevorzugt sind hierunter die Vinylester. Unter den Carbonsäuren mit verzweigtem Kohlenwasserstoffrest sind solche bevorzugt, deren Verzweigung sich in der $\alpha$-Position zur Carboxylgruppe befindet, wobei das $\alpha$-Kohlenstoffatom besonders bevorzugt tertiär ist, d. h. die Carbonsäure eine sogenannte Neocarbonsäure ist. Vorzugsweise ist der Kohlenwasserstoffrest der Carbonsäure jedoch linear.

Beispiele für geeignete Carbonsäurealkenylester sind Vinylacetat, Vinylpropionat, Vinylbutyrat, Vinyl-2-ethylhexanoat, Neopentansäurevinylester, Hexansäurevinylester, Neononansäurevinylester, Neodecansäurevinylester und die entsprechenden Propenyl-ester, wobei die Vinylester bevorzugt sind. Ein besonders bevorzugter Carbonsäurealkenylester ist Vinylacetat; typische hieraus resultierende Copolymere der Gruppe (K1) sind die mit am häufigsten eingesetzten Ethylen-Vinylacetat-Copolymere ("EVA").
Besonders vorteilhaft einsetzbare Ethylen-Vinylacetat-Copolymere und ihre Herstellung sind in der WO 99/29748 beschrieben.

Als Copolymere der Klasse (K1) sind auch solche geeignet, die zwei oder mehrere voneinander verschiedene Carbonsäurealkenylester einpolymerisiert enthalten, wobei diese sich in der Alkenylfunktion und/oder in der Carbonsäuregruppe unterscheiden. Ebenfalls geeignet sind Copolymere, die neben dem/den Carbonsäurealkenylester(n) wenigstens ein Olefin und/oder wenigstens ein (Meth)Acrylsäureester einpolymerisiert enthalten.

Auch Terpolymere aus einem $C_2$- bis $C_{40}$- $\alpha$-Olefin, einem $C_1$- bis $C_{20}$-Alkylester einer ethylenisch ungesättigten Monocarbonsäure mit 3 bis 15 Kohlenstoffatomen und einem $C_2$- bis $C_{14}$-Alkenylester einer gesättigten Monocarbonsäure mit 2 bis 21 Kohlenstoffatomen sind als Copolymere der Klasse (K1) geeignet. Derartige Terpolymere sind in der WO 2005/054314 beschrieben. Ein typisches derartiges Terpolymer ist aus Ethylen, Acrylsäure-2-ethylhexylester und Vinylacetat aufgebaut.

Das wenigstens eine oder die weiteren ethylenisch ungesättigten Monomeren sind in den Copolymeren der Klasse (K1) in einer Menge von vorzugsweise 1 bis 50 Gew.-%, insbesondere von 10 bis 45 Gew.-% und vor allem von 20 bis 40 Gew.-%, bezogen auf das Gesamtcopolymer, einpolymerisiert. Der gewichtsmäßige Hauptanteil der Monomereinheiten in den Copolymeren der Klasse (K1) stammt somit in der Regel aus den $C_2$- bis $C_{40}$-Basis-Olefinen.

Die Copolymere der Klasse (K1) weisen vorzugsweise ein zahlenmittleres Molekulargewicht $M_n$ von 1000 bis 20.000, besonders bevorzugt von 1000 bis 10.000 und insbesondere von 1000 bis 8000 auf.

Typische Kammpolymere der Komponente (K2) sind beispielsweise durch die Copolymerisation von Maleinsäureanhydrid oder Fumarsäure mit einem anderen ethylenisch ungesättigten Monomer, beispielsweise mit einem $\alpha$-Olefin oder einem ungesättigten Ester wie Vinylacetat, und anschließende Veresterung der Anhydrid- bzw. Säurefunktion mit einem Alkohol mit wenigstens 10 Kohlenstoffatomen erhältlich. Weitere geeignete Kammpolymere sind Copolymere von $\alpha$ -Olefinen und veresterten Comonomeren, beispielsweise veresterte Copolymere von Styrol und Maleinsäureanhydrid oder veresterte Copolymere von Styrol und Fumarsäure. Geeignete Kammpolymere können auch Polyfumarate oder Polymaleinate sein. Außerdem sind Homo- und Copolymere von Vinylethern geeignete Kammpolymere. Als Komponente der Klasse (K2) geeignete Kammpolymere sind beispielsweise auch solche, die in der WO 2004/035715 und in "Comb-Like Polymers. Structure and Properties", N. A. Plate und V. P. Shibaev, J. Poly. Sci. Macromolecular Revs. 8, Seiten 117 bis 253 (1974)" beschrieben sind. Auch Gemische von Kammpolymeren sind geeignet.

Als Komponente der Klasse (K3) geeignete Polyoxyalkylene sind beispielsweise Poly-oxyalkylenester, Polyoxyalkylenether, gemischte Polyoxyalkylenesterether und Gemische davon. Bevorzugt enthalten diese Polyoxyalkylenverbindungen wenigstens eine, vorzugsweise wenigstens zwei lineare Alkylgruppen mit jeweils 10 bis 30 Kohlenstoffatomen und eine Polyoxyalkylengruppe mit einem zahlenmittleren Molekulargewicht von bis zu 5000. Derartige Polyoxyalkylenverbindungen sind beispielsweise in der EP-A 061 895 sowie in der US 4 491 455 beschrieben. Besondere Polyoxyalkylenverbindungen basieren auf Polyethylenglykolen und Polypropylenglykolen mit einem zahlenmittleren Molekulargewicht von 100 bis 5000. Weiterhin sind Polyoxyalkylenmono- und -diester von Fettsäuren mit 10 bis 30 Kohlenstoffatomen wie Stearinsäure oder Behensäure geeignet.

Als Komponente der Klasse (K4) geeignete polare Stickstoffverbindungen können sowohl ionischer als auch nicht ionischer Natur sein und besitzen vorzugsweise wenigstens einen, insbesondere wenigstens zwei Substituenten in Form eines tertiären Stickstoffatoms der allgemeinen Formel $>NR^7$, worin $R^7$ für einen $C_8$- bis $C_{40}$-Kohlenwas-serstoffrest steht. Die Stickstoffsubstituenten können auch quaternisiert, das heißt in kationischer Form, vorliegen. Beispiele für solche Stickstoffverbindungen sind Ammoniumsalze und/oder Amide, die durch die Umsetzung wenigstens eines mit wenigstens einem Kohlenwasserstoffrest substituierten Amins mit einer Carbonsäure mit 1 bis 4 Carboxylgruppen bzw. mit einem geeignetem Derivat davon erhältlich sind. Vorzugsweise enthalten die Amine wenigstens einen linearen $C_8$- bis $C_{40}$-Alkylrest. Zur Herstellung der genannten polaren Stickstoffverbindungen geeignete primäre Amine sind beispielsweise Octylamin, Nonylamin, Decylamin, Undecylamin, Dodecylamin, Tetradecylamin und die höheren linearen Homologen, hierzu geeignete sekundäre Amine sind beispielsweise Dioctadecylamin und Methylbehenylamin. Geeignet sind hierzu auch Amingemische, insbesondere großtechnisch zugängliche Amingemische wie Fettamine oder hydrierte

Tallamine, wie sie beispielsweise in Ullmanns Encyclopedia of Industrial Chemistry, 6. Auflage, im Kapitel "Amines, aliphatic" beschrieben werden. Für die Umsetzung geeignete Säuren sind beispielsweise Cyclohexan-1,2-dicarbonsäure, Cyclohexen-1,2-dicarbonsäure, Cyclopentan-1,2-dicarbonsäure, Naphthalindicarbonsäure, Phthalsäure, Isophthalsäure, Terephthalsäure und mit langkettigen Kohlenwasserstoffresten substituierte Bernsteinsäuren.

Insbesondere ist die Komponente der Klasse (K4) ein öllösliches Umsetzungsprodukt aus mindestens eine tertiäre Aminogruppe aufweisenden Poly($C_2$- bis $C_{20}$-Carbonsäuren) mit primären oder sekundären Aminen. Die diesem Umsetzungsprodukt zugrundeliegenden mindestens eine tertiäre Aminogruppe aufweisenden Poly($C_2$- bis $C_{20}$-Carbonsäuren) enthalten vorzugsweise mindestens 3 Carboxylgruppen, insbesondere 3 bis 12, vor allem 3 bis 5 Carboxylgruppen. Die Carbonsäure-Einheiten in den Polycarbonsäuren weisen vorzugsweise 2 bis 10 Kohlenstoffatome auf, insbesondere sind es Essigsäure-Einheiten. Die Carbonsäure-Einheiten sind in geeigneter Weise zu den Polycarbonsäuren verknüpft, meist über ein oder mehrere Kohlenstoff- und/oder Stickstoffatome. Vorzugsweise sind sie an tertiäre Stickstoffatome angebunden, die im Falle mehrerer Stickstoffatome über Kohlenwasserstoffketten verbunden sind.

Vorzugsweise ist die Komponente der Klasse (K4) ein öllösliches Umsetzungsprodukt auf Basis von mindestens eine tertiäre Aminogruppe aufweisenden Poly($C_2$- bis $C_{20}$-Carbonsäuren) der allgemeinen Formel IIa oder IIb

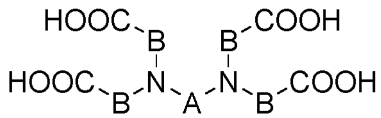

(IIa)

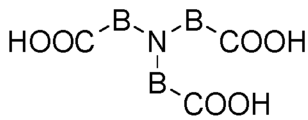

(IIb)

in denen die Variable A eine geradkettige oder verzweigte $C_2$- bis $C_6$-Alkylengruppe oder die Gruppierung der Formel III

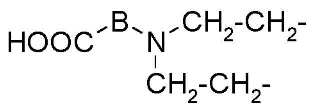

(III)

darstellt und die Variable B eine $C_1$- bis $C_{19}$-Alkylengruppe bezeichnet. Die Verbindungen der allgemeinen Formel IIa und IIb weisen insbesondere die Eigenschaften eines WASA auf.

Weiterhin ist das bevorzugte öllösliche Umsetzungsprodukt der Komponente (K4), insbesondere das der allgemeinen Formel IIa oder IIb, ein Amid, ein Amidammoniumsalz oder ein Ammoniumsalz, in dem keine, eine oder mehrere Carbonsäuregruppen in Amidgruppen übergeführt sind.

Geradkettige oder verzweigte $C_2$- bis $C_6$-Alkylengruppen der Variablen A sind beispielsweise 1,1-Ethylen, 1,2-Propylen, 1,3-Propylen, 1,2-Butylen, 1,3-Butylen, 1,4-Bu-tylen, 2-Methyl-1,3-propylen, 1,5-Pentylen, 2-Methyl-1,4-butylen, 2,2-Dimethyl-1,3-pro-pylen, 1,6-Hexylen (Hexamethylen) und insbesondere 1,2-Ethylen. Vorzugsweise umfasst die Variable A 2 bis 4, insbesondere 2 oder 3 Kohlenstoffatome.

$C_1$- bis $C_{19}$-Alkylengruppen der Variablen B sind vor beispielsweise 1,2-Ethylen, 1,3-Propylen, 1,4-Butylen, Hexamethylen, Octamethylen, Decamethylen, Dodecamethylen, Tetradecamethylen, Hexadecamethylen, Octadecamethylen, Nonadecamethylen und insbesondere Methylen. Vorzugsweise umfasst die Variable B 1 bis 10, insbesondere 1 bis 4 Kohlenstoffatome.

Die primären und sekundären Amine als Umsetzungspartner für die Polycarbonsäuren zur Bildung der Komponente (K4) sind üblicherweise Monoamine, insbesondere aliphatische Monoamine. Diese primären und sekundären Amine können aus einer Vielzahl von Aminen ausgewählt sein, die - gegebenenfalls miteinander verbundene - Kohlenwasserstoffreste tragen.

Meist sind diese den öllöslichen Umsetzungsprodukten der Komponente (K4) zugrundeliegenden Amine sekundären Amine und weisen die allgemeine Formel $HN(R^8)_2$ auf, in der die beiden Variablen $R^8$ unabhängig voneinander jeweils geradkettige oder verzweigte $C_{10}$- bis $C_{30}$-Alkylreste, insbesondere $C_{14}$- bis $C_{24}$-Alkylreste bedeuten. Diese längerkettigen Alkylreste sind vorzugsweise geradkettig oder nur in geringem Grade verzweigt. In der Regel leiten sich die genannten sekundären Amine hinsichtlich ihrer längerkettigen Alkylreste von natürlich vorkommenden Fettsäuren bzw. von deren Derivaten ab. Vorzugsweise sind die beiden Reste $R^8$ gleich.

Die genannten sekundären Amine können mittels Amidstrukturen oder in Form der Ammoniumsalze an die Polycarbonsäuren gebunden sein, auch kann nur ein Teil als Amidstrukturen und ein anderer Teil als Ammoniumsalze vorliegen. Vorzugsweise liegen nur wenige oder keine freien Säuregruppen vor. Vorzugsweise liegen die öllöslichen Umsetzungsprodukte der Komponente (K4) vollständig in Form der Amidstrukturen vor.

Typische Beispiele für derartige Komponenten (K4) sind Umsetzungsprodukte der Nitrilotriessigsäure, der Ethylendiamintetraessigsäure oder der Propylen-1,2-diamintetra-essigsäure mit jeweils 0,5 bis 1,5 Mol pro Carboxylgruppe, insbesondere 0,8 bis 1,2 Mol pro Carboxylgruppe, Dioleylamin, Dipalmitinamin, Dikokosfettamin, Distearylamin, Dibehenylamin oder insbesondere Ditalgfettamin. Eine besonders bevorzugte Komponente (K4) ist das Umsetzungsprodukt aus 1 Mol Ethylendiamintetraessigsäure und 4 Mol hydriertem Ditalgfettamin.

Als weitere typische Beispiele für die Komponente (K4) seien die N,N-Dialkylammoni-umsalze von 2-N',N'-Dialkylamidobenzoaten, beispielsweise das Reaktionsprodukt aus 1 Mol Phthalsäureanhydrid und 2 Mol Ditalgfettamin, wobei letzteres hydriert oder nicht hydriert sein kann, und das Reaktionsprodukt von 1 Mol eines Alkenylspirobislactons mit 2 Mol eines Dialkylamins, beispielsweise Ditalgfettamin und/oder Talgfettamin, wobei die beiden letzteren hydriert oder nicht hydriert sein können, genannt.

Weitere typische Strukturtypen für die Komponente der Klasse (K4) sind cyclische Verbindungen mit tertiären Aminogruppen oder Kondensate langkettiger primärer oder sekundärer Amine mit carbonsäurehaltigen Polymeren, wie sie in der WO 93/18115 beschrieben sind. Als Kaltfließverbesserer der Komponente der Klasse (K5) geeignete Sulfocarbonsäuren, Sulfonsäuren oder deren Derivate sind beispielsweise die öllöslichen Carbonsäureamide und Carbonsäureester von ortho-Sulfobenzoesäure, in denen die Sulfonsäurefunktion als Sulfonat mit alkylsubstituierten Ammoniumkationen vorliegt, wie sie in der EP-A 261 957 beschrieben werden.

Als Kaltfließverbesserer der Komponente der Klasse (K6) geeignete Poly(meth)acryl-säureester sind sowohl Homo- als auch Copolymere von Acryl- und Methacrylsäure-estern. Bevorzugt sind Copolymere von wenigstens zwei voneinander verschiedenen (Meth)Acrylsäureestern, die sich bezüglich des einkondensierten Alkohols unterscheiden. Gegebenenfalls enthält das Copolymer noch ein weiteres, davon verschiedenes olefinisch ungesättigtes Monomer einpolymerisiert. Das gewichtsmittlere Molekulargewicht des Polymers beträgt vorzugsweise 50.000 bis 500.000. Ein besonders bevorzugtes Polymer ist ein Copolymer von Methacrylsäure und Methacrylsäureestern von gesättigten $C_{14}$- und $C_{15}$-Alkoholen, wobei die Säuregruppen mit hydriertem Tallamin neutralisiert sind. Geeignete Poly(meth)acrylsäureester sind beispielsweise in der WO 00/44857 beschrieben.

Dem Mitteldestillat-Kraftstoff bzw. Dieselkraftstoff wird der Kaltfließverbesserer bzw. das Gemisch verschiedener Kaltfließverbesserer in einer Gesamtmenge von vorzugsweise 10 bis 5000 Gew.-ppm, besonders bevorzugt von 20 bis 2000 Gew.-ppm, stärker bevorzugt von 50 bis 1000 Gew.-ppm und insbesondere von 100 bis 700 Gew.-ppm, z.B. von 200 bis 500 Gew.-ppm, zugegeben.

B4) Schmierfähigkeitsverbesserer

Geeignete Schmierfähigkeitsverbesserer (Lubricity Improver bzw. Friction Modifier) basieren üblicherweise auf Fettsäuren oder Fettsäureestern. Typische Beispiele sind Tallölfettsäure, wie beispielsweise in der WO 98/004656 beschrieben, und Glycerinmonooleat. Auch die in der US 6 743 266 B2 beschriebenen Reaktionsprodukte aus natürlichen oder synthetischen Ölen, beispielsweise Triglyceriden, und Alkanolaminen sind als solche Schmierfähigkeitsverbesserer geeignet.

B5) Andere Korrosionsinhibitoren als die beschriebenen freie Säuregruppen tragende Umsetzungsprodukte von Polyisobuten

Geeignete Korrosionsinhibitoren sind z.B. Bernsteinsäureester, vor allem mit Polyolen, Fettsäurederivate, z.B. Ölsäureester, oligomerisierte Fettsäuren, substituierte Ethanolamine und Produkte, die unter dem Handelsnamen RC 4801 (Rhein Chemie Mannheim, Deutschland), Irgacor® L12 (BASF SE) oder HiTEC 536 (Ethyl Corporation) vertrieben werden.

B6) Demulgatoren

Geeignete Demulgatoren sind z.B. die Alkali- oder Erdalkalisalze von Alkyl-substituierten Phenol- und Naphthalinsulfonaten und die Alkali- oder Erdalkalisalze von Fettsäuren, außerdem neutrale Verbindungen wie Alkoholalkoxylate, z.B. Alkoholethoxylate, Phenolalkoxylate, z.B. tert-Butylphenolethoxylat oder tert-Pentylphenolethoxylat, Fettsäuren, Alkylphenole, Kondensationsprodunkte von Ethylenoxid (EO) und Propylenoxid (PO), z.B. auch in Form von EO/PO-Blockcopolymeren, Polyethylenimine oder auch Polysiloxane.

B7) Dehazer

Geeignete Dehazer sind z.B. alkoxylierte Phenol-Formaldehyd-Kondensate, wie beispielsweise die unter dem Handelsnamen erhältlichen Produkte NALCO 7D07 (Nalco) und TOLAD 2683 (Petrolite).

B8) Antischaummittel

Geeignete Antischaummittel sind z.B. Polyether-modifizierte Polysiloxane, wie beispielsweise die unter dem Handelsnamen erhältlichen Produkte TEGOPREN 5851 (Goldschmidt), Q 25907 (Dow Corning) und RHODOSIL (Rhone Poulenc).

B9) Cetanzahlverbesserer

Geeignete Cetanzahlverbesserer sind z.B. aliphatische Nitrate wie 2-Ethylhexylnitrat und Cyclohexylnitrat sowie Peroxide wie Di-tert-butylperoxid.

B10) Antioxidantien

Geeignete Antioxidantien sind z.B. substituierte Phenole, wie 2,6-Di-tert.-butylphenol und 6-Di-tert.-butyl-3-methylphenol sowie Phenylendiamine wie N,N'-Di-sec.-butyl-p-phenylendiamin.

B11) Metalldeaktivatoren

Geeignete Metalldeaktivatoren sind z.B. Salicylsäurederivate wie N,N'-Disalicyliden-1,2-propandiamin.

B12) Lösungsmittel

Geeignete sind z.B. unpolare organische Lösungsmittel wie aromatische und aliphatische Kohlenwasserstoffe, beispielsweise Toluol, Xylole, "white spirit" und Produkte, die unter dem Handelsnamen SHELLSOL (Royal Dutch/Shell Group) und EXXSOL (ExxonMobil) vertrieben werden, sowie polare organische Lösungsmittel, bei-spielsweise Alkohole wie 2-Ethylhexanol, Decanol und Isotridecanol. Derartige Lösungsmittel gelangen meist zusammen mit den vorgenannten Additiven und Co-Additi-ven, die sie zur besseren Handhabung lösen oder verdünnen sollen, in den Dieselkraftstoff.

**C) Kraftstoffe**

Die erfindungsgemäße Verwendung betrifft im Prinzip jegliche Kraftstoffe, bevorzugt Diesel- und Ottokraftstoffe.

Bei Mitteldestillat-Kraftstoffen wie Dieselkraftstoffen oder Heizölen handelt es sich vorzugsweise um Erdölraffinate, die üblicherweise einen Siedebereich von 100 bis 400° C haben. Dies sind meist Destillate mit einem 95%-Punkt bis zu 360° C oder auch darüber hinaus. Dies können aber auch so genannte "Ultra Low Sulfur Diesel" oder "City Diesel" sein, gekennzeichnet durch einen 95%-Punkt von beispielsweise maximal 345° C und einem Schwefelgehalt von maximal 0,005 Gew.-% oder durch einen 95%-Punkt von beispielsweise 285° C und einem Schwefelgehalt von maximal 0,001 Gew.-%. Neben den durch Raffination erhältlichen mineralischen Mitteldestillat-Kraftstoffen bzw. Dieselkraftstoffen sind auch solche, die durch Kohlevergasung oder Gasverflüssigung ["gas to liquid" (GTL)-Kraftstoffe] oder durch Biomasse-Verflüssigung ["biomass to liquid" (BTL)-Kraftstoffe] erhältlich sind, geeignet. Geeignet sind auch Mischungen der vorstehend genannten Mitteldestillat-Kraftstoffe bzw. Dieselkraftstoffe mit regenerativen Kraftstoffen, wie Biodiesel oder Bioethanol.

Die Qualitäten der Heizöle und Dieselkraftstoffe sind beispielsweise in DIN 51603 und EN 590 näher festgelegt (vgl. auch Ullmann's Encyclopedia of Industrial Chemistry, 5. Auflage, Band A12, S. 617 ff.).

Die erfindungsgemäße Verwendung in Mitteldestillat-Kraftstoffen aus fossilem, pflanzlichem oder tierischem Ursprung, die im wesentlichen Kohlenwasserstoffmischungen darstellen, betrifft auch Mischungen aus solchen Mitteldestillaten mit Biobrennstoffölen (Biodiesel). Derartige Mischungen werden von dem Begriff "Mitteldestillat-Kraftstoff" umfasst. Sie sind handelsüblich und enthalten meist die Biobrennstofföle in untergeordneten Mengen, typischerweise in Mengen von 1 bis 30 Gew.-% insbesondere von 3 bis 10 Gew.-%, bezogen auf die Gesamtmenge aus Mitteldestillat fossilen, pflanzlichem oder tierischen Ursprungs und Biobrennstofföl.

Biobrennstofföle basieren in der Regel auf Fettsäureestern, vorzugsweise im wesentlichen auf Alkylester von Fettsäuren, die sich von pflanzlichen und/oder tierischen Ölen und/oder Fetten ableiten. Unter Alkylestern werden üblicherweise Niedrigalkylester, insbesondere $C_1$-bis $C_4$-Alkylester, verstanden, die durch Umesterung der in pflanzlichen und/oder tierischen Ölen und/oder Fetten vorkommenden Glyceride, insbesondere Triglyceride, mittels Niedrigalkoholen,

beispielsweise Ethanol oder vor allem Methanol ("FAME"), erhältlich sind. Typische Niedrigalkylester auf Basis von pflanzlichen und/oder tierischen Ölen und/oder Fetten, die als Biobrennstofföl oder Komponenten hierfür Verwendung finden, sind beispielsweise Sonnenblumenmethylester, Palmölmethylester ("PME"), Sojaölmethylester ("SME") und insbesondere Rapsölmethylester ("RME").

Besonders bevorzugt handelt es sich bei den Mitteldestillat-Kraftstoffen bzw. Dieselkraftstoffen um solche mit niedrigem Schwefelgehalt, das heißt mit einem Schwefelgehalt von weniger als 0,05 Gew.-%, vorzugsweise von weniger als 0,02 Gew.-%, insbesondere von weniger als 0,005 Gew.-% und speziell von weniger als 0,001 Gew.-% Schwefel.

Als Ottokraftstoffe kommen alle handelsüblichen Ottokraftstoffzusammensetzungen in Betracht. Als typischer Vertreter soll hier der marktübliche Eurosuper Grundkraftstoff gemäß EN 228 genannt werden. Weiterhin sind auch Ottokraftstoffzusammensetzungen der Spezifikation gemäß WO 00/47698 mögliche Einsatzgebiete für die vorliegende Erfindung.

Die nachfolgenden Beispiele sollen die vorliegende Erfindung erläutern, ohne sie zu beschränken.

Beispiele

GPC-Analytik

Wenn nicht anders angegeben wurde das massenmittlere Mw und zahlenmittlere Molekulargewicht Mn der Polymere mittels Gel-Permeations-Chromatographie gemessen (GPC). GPC-Trennung erfolgte über zwei PLge Mixed B-Säulen (Agilent) in Tetrahydrofuran bei 35 ° C. Die Kalibrierung erfolgte mittels eines engverteilten Polystyrolstandards (Firma PSS, Deutschland) mit Molekulargewicht 162-50400 Da. Hexylbenzol wurde als Marker für niedriges Molekulargewicht verwendet.

Synthesebeispiel 1

524 g (0,54 mol) eines Polyisobutens mit einem zahlenmittleren Molgewicht Mn von 1000 g/mol und einem Gehalt an $\alpha$-Doppelbindungen von 87% wurden mit 87g (0,89 mol) Maleinsäureanhydrid in einem 11-Autoklav, ausgerüstet mit Rührer und Thermometer vorgelegt. Das Gemisch wurde bei 210 ° C unter Stickstoff über 8 Stunden umgesetzt, wobei der Druck auf 3 bar anstieg. Das Reaktionsgemisch wurde auf Raumtemperatur abgekühlt, mit Hilfe von 1l Toluol in einen Rundkolben überführt und filtriert. Lösungsmittel und Maleinsäureanhydrid wurden an einem Rotationsverdampfer bei 190 ° C bei 1 mbar abgetrennt. Man erhielt 580 g eines dunkelbraunen, öligen und viskosen Produktes.

Um die Verseifungszahl zu ermitteln wurde das Produkt 50%ig in Toluol gelöst. Die Verseifungszahl des Produktes wurde gemessen durch Reaktion von 10 ml der erhaltenen Lösung mit Überschuß Kaliumhydroxid, gefolgt von Rücktitration des Rests Kaliumhydroxid mit Salzsäure. Die Verseifungszahl bestimmte sich zu 120 mg KOH/g.

10 ml der Lösung wurden dann über eine Kieselgelsäule eluiert um den Gehalt an unfunktionalisertem Polyisobuten zu bestimmen. Das gesamte mit Maleinsäureanhydrid umgesetzte Polyisobuten wurde auf der Säule zurückgehalten und Polyisobuten wurde mit Hexan eluiert. Demnach enthielt das Reaktionsgemisch 13,4 Gew% unfunktionalisiertes Polyisobuten.

Nach den obigen Messungen enthielt das Reaktionsgemisch neben 13,4 Gew% unfunktionalisiertem Polyisobuten monofunktionalisiertes und difunktionalisiertes Polyisobutenbernsteinsäureanhydrid, woraus sich unter der Voraussetzung, daß keine anderen Nebenprodukte anwesend waren, ein Bismaleinierungsgrad von 40,3 % ergibt.

Synthesebeispiel 2: Hydrolyse des Polyisobutenbernsteinsäureanhydrides aus Synthesebeispiel 1

101g des Polyisobutenbernsteinsäureanhydrides aus Synthesebeispiel 1 wurden in 100 ml Ethylmethylketon in einem 500 ml Vierhalskolben mit Rückflußkühler und Thermometer gelöst. Die orange Lösung wurde auf 50 ° C erwärmt und 50 ml Wasser wurden innerhalb von 6 Minuten zugetropft, wobei die Temperatur des Gemisches zwischen 48 und 53 ° C gehalten wurde. Anschließend wurde das Gemisch unter Rückfluß für 5 Stunden auf 75 - 76 ° C unter Rückfluß erhitzt. 150 ml Toluol wurden der Lösung zugegeben und ein Wasserabscheider mit 30 ml Toluol auf den Kolben aufgesetzt. Das Gemisch wurde unter Rückfluß 2 Stunden bei 80 bis 85 ° C gerührt, wobei 48 ml wäßrige Phase kontinuierlich über den Wasserabscheider abgetrennt wurden. Sobald die weitere Bildung von Wasser aufhörte, wurde das Gemisch auf Raumtemperatur abgekühlt, filtriert und die Lösung am Rotationsverdampfer bei 80 ° C und 1 mbar aufkonzentriert. Man erhielt 99,9 g eines orangen, trüben, öligviskosen Produktes.

In analoger Weise zu Synthesebeispiel 1 und 2 wurden in den Synthesebeispielen 3 und 4 durch Veränderung der Stöchiometrie Maleinsäureanhydrid : Polyisobuten Reaktionsgemische mit einem Bismaleinierungsgrad von 10% bzw. 16,9% (17,6 Gew% unfunktionalisiertes Polyisobuten) erhalten.

Anwendungsbeispiele

1) Calciumverträglichkeitstest:

100 ml Motorenöl (Shell Helix®, Figur 1, Becherglas links, mit einem Ca-Gehalt von 1500 ppm, Mg-Gehalt 1100 ppm und Zn-Gehalt 1300 ppm) wurden im Becherglas auf 70° C erhitzt und anschließend 1 ml Korrosionsinhibitor zugesetzt. Sollte die Lösung noch klar sein, gibt man weitere 1 ml Inhibitor zu. Wenn sich die Lösung trübt, gilt der Test als nicht bestanden (z.B. Figur 1, rechtes Becherglas). Figur 1 zeigt im rechten Becherglas wurde 1 ml Dimerfettsäure (dimere Ölsäure; CAS: 61788-89-4, 40%ig in Solvent Naphtha) eingesetzt. Man erkennt eine deutlich sichtbare Trübung.

Figur 2 zeigt von links nach rechts das reine Shell Helix®, Öl versetzt mit Produkt aus Synthesebeispiel 4, Öl versetzt mit Produkt aus Synthesebeispiel 2 und Öl versetzt mit Produkt aus Synthesebeispiel 3. Man sieht, daß alle Produkte nicht zu einer Trübung führen.

2) Stahlkorrosionstest nach ASTM D 665 B (Benzin)

Als Kraftstoff wurde handelsüblicher Ottokraftstoff E0 CEC RF-12-09 der Firma Haltermann (Chargennummer 1878) eingesetzt und mit 490 mg/kg eines Additivpakets aus Polyisobutenamin und Trägeröl (Polyether) additiviert. Zur Formulierung wurden die in der folgenden Tabelle angegebenen Korrosionsinhibitoren in den angegebenen Mengen (bezogen auf Aktivkomponente) zugesetzt und einem Korrosionstest nach ASTM D 665 B in Salzwasser unterworfen.

Als Vergleich wurde Dimerfettsäure als Korrosionsinhibitor (dimere Ölsäure; CAS: 61788-89-4, 40%ig in Solvent Naphtha) eingesetzt.

| Formulierung | Korrosionsinhibitor | Bismaleinierungsgrad | Dosierung [mg/kg] aktiv | Bewertung nach NACE |
|---|---|---|---|---|
| E0 Basiskraftstoff | - | | - | E |
| Formulierung 1** | Dimerfettsäure | - | 5 | B++ |
| Formulierung 2** | Synthesebeispiel 2 | 40,3% | 5 | A |
| Formulierung 3** | Synthesebeispiel 3 | 10% | 10 | B+ |
| Formulierung 4** | Synthesebeispiel 4 | 16,9% | 5 | B+ |
| **Polyisobuten-Amin haltiges Grundpaket mit Polyetherträgeröl bei 490 mg/kg | | | | |

Die Bewertung erfolgte folgendermaßen:

| | |
|---|---|
| A | 100% rostfrei |
| B++ | 0,1 % oder weniger der gesamten Oberfläche verrostet |
| B+ | 0,1 % bis 5% der gesamten Oberfläche verrostet |
| B | 5 % bis 25% der gesamten Oberfläche verrostet |
| C | 25 % bis 50% der gesamten Oberfläche verrostet |
| D | 50 % bis 75% der gesamten Oberfläche verrostet |
| E | 75 % bis 100% der gesamten Oberfläche verrostet |

**Patentansprüche**

**1.** Verwendung von freie Säuregruppen tragenden Umsetzungsprodukten von Polyisobuten, erhältlich indem man Polyisobuten (A) mit einem zahlenmittleren Molekulargewicht Mn von 200 bis 10000 mit Maleinsäure oder deren Derivate, ausgewählt aus der Gruppe bestehend aus Monoalkylestern, Dialkylestern und Anhydriden (B), in einem stöchiometrischen Verhältnis von mehr als einem Äquivalent Maleinsäure oder deren Derivate (B), pro reaktiver Doppelbindung im Polyisobuten (A) umsetzt,

mit der Maßgabe, daß

- im Falle der Verwendung von Monoalkylestern und/oder Dialkylestern als Verbindung (B) mindestens 10% der vorhandenen Estergruppen verseift und/oder
- im Fall der Verwendung von Anhydriden als Verbindung (B) mindestens 10% der vorhandenen Anhydridgruppen hydrolysiert vorliegen,

als Korrosionsinhibitoren in Kraft- oder Schmierstoffen, bevorzugt in Kraftstoffen, besonders bevorzugt in Kraftstoffen, die einen Gehalt an Alkali- und/oder Erdalkalimetallen und/oder Zink von mindestens 0,1 Gew.ppm aufweisen, **dadurch gekennzeichnet, daß** das freie Säuregruppen tragende Umsetzungsprodukt von Polyisobuten einen Bismaleinierungsgrad von 11 bis 40% aufweist,
wobei der Bismaleinierungsgrad (BMG) gemäß der Formel

$$\mathrm{BMG} = 100\% \times [(\text{wt-\%}(\text{BM PIBSA})/(\text{wt-\%}(\text{BM PIBSA})+\text{wt-\%}(\text{PIBSA}))]$$

berechnet wird,
wobei wt-%(X) für den jeweiligen Gewichtsanteil der Komponente X (X = PIBSA (einfach maleiniertes Polyisobuten) oder BM PIBSA (mehr als einfach maleiniertes Polyisobuten)) im Umsetzungsprodukt von Polyisobuten mit Maleinsäureanhydrid steht.

2. Verwendung gemäß Anspruch 1, **dadurch gekennzeichnet, daß** Polyisobuten (A) ein zahlenmittleres Molekulargewicht $M_n$ von 500 bis 2500 aufweist.

3. Verwendung gemäß Anspruch 1 oder 2, **dadurch gekennzeichnet, daß** es sich bei der $\alpha,\beta$-ungesättigten Mono- oder Dicarbonsäure oder deren Derivate (B) um Maleinsäureanhydrid handelt.

4. Verwendung gemäß einem der vorstehenden Ansprüche, **dadurch gekennzeichnet, daß** der Anteil an unumgesetztem Polyisobuten im Umsetzungsprodukt nicht mehr als 30 Gew% beträgt.

5. Verwendung gemäß einem der vorstehenden Ansprüche zur Verringerung der Korrosion an Buntmetalloberflächen.

6. Verwendung gemäß einem der vorstehenden Ansprüche in Ottokraftstoffen mit einem Gehalt an Natrium und/oder Kalium in Mengen von mindestens 0,1 Gew.ppm.

7. Verwendung gemäß einem der vorstehenden Ansprüche in Ottokraftstoffen mit einem Gehalt an Magnesium und/oder Calcium in Mengen von mindestens 0,1 Gew.ppm.

8. Verwendung gemäß einem der vorstehenden Ansprüche in Ottokraftstoffen mit einem Gehalt an Zink in Mengen von mindestens 0,1 Gew.ppm.

9. Verwendung gemäß einem der vorstehenden Ansprüche zur Verhinderung und Verminderung von Ablagerungen im Kraftstoffsystem.

**Claims**

1. The use of reaction products of polyisobutene that bear free acid groups, obtainable by reacting polyisobutene (A) having a number-average molecular weight Mn of 200 to 10 000 with maleic acid or derivatives thereof, selected from the group consisting of monoalkyl esters, dialkyl esters and anhydrides (B), in a stoichiometric ratio of more than one equivalent of maleic acid or derivatives thereof (B) per reactive double bond in the polyisobutene (A), with the proviso that

- in the case of use of monoalkyl esters and/or dialkyl esters as compound (B), at least 10% of the ester groups present are in hydrolyzed form and/or
- in the case of use of anhydrides as compound (B), at least 10% of the anhydride groups present are in hydrolyzed form,

as corrosion inhibitors in fuels or lubricants, preferably in fuels, more preferably in fuels having a content of alkali metals and/or alkaline earth metals and/or zinc of at least 0.1 ppm by weight, wherein the reaction product of polyisobutene that bears free acid groups has a bismaleation level of 11% to 40%,
where the bismaleation level (BML) is calculated by the formula

BML = 100% x [(wt%(BM PIBSA)/(wt%(BM PIBSA) + wt%(PIBSA))]

where wt%(X) represents the respective proportion by weight of component X (X = PIBSA (monomaleated polyisobutene) or BM PIBSA (more than monomaleated polyisobutene)) in the reaction product of polyisobutene with maleic anhydride.

2. The use according to claim 1, wherein polyisobutene (A) has a number-average molecular weight $M_n$ of 500 to 2500.

3. The use according to claim 1 or 2, wherein the $\alpha,\beta$-unsaturated mono- or dicarboxylic acid or their derivatives (B) are maleic anhydride.

4. The use according to any of the preceding claims, wherein the proportion of unconverted polyisobutene in the reaction product is not more than 30% by weight.

5. The use according to any of the preceding claims for reduction of corrosion on nonferrous metal surfaces.

6. The use according to any of the preceding claims in gasoline fuels having a sodium and/or potassium content in amounts of at least 0.1 ppm by weight.

7. The use according to any of the preceding claims in gasoline fuels having a magnesium and/or calcium content in amounts of at least 0.1 ppm by weight.

8. The use according to any of the preceding claims in gasoline fuels having a zinc content in amounts of at least 0.1 ppm by weight.

9. The use according to any of the preceding claims for preventing and reducing deposits in the fuel system.

## Revendications

1. Utilisation de produits de transformation portant des groupes acides libres de polyisobutène, pouvant être obtenus en ce qu'on transforme un polyisobutène (A) doté d'un poids moléculaire moyen en nombre Mn de 200 à 10 000 avec de l'acide maléique ou ses dérivés, choisis dans le groupe constitué par des esters de monoalkyle, des esters de dialkyle et des anhydrides (B), en un rapport stoechiométrique supérieur à un équivalent d'acide maléique ou de ses dérivés (B), par double liaison réactive dans le polyisobutène (A),
à la condition que

- dans le cas de l'utilisation d'esters de monoalkyle et/ou d'esters de dialkyle en tant que composé (B), au moins 10 % des groupes esters présents sont présents sous forme saponifiée et/ou
- dans le cas de l'utilisation d'anhydrides en tant que composé (B), au moins 10 % des groupes anhydride présents sont présents sous forme hydrolysée,

en tant qu'inhibiteurs de corrosion dans des carburants ou des lubrifiants, préférablement dans des carburants, particulièrement dans des carburants qui présentent une teneur en métaux alcalins et/ou alcalino-terreux et/ou de zinc d'au moins 0,1 ppm en poids, **caractérisée en ce que** le produit de transformation portant des groupes acides libres de polyisobutène présente un degré de bismaléinisation de 11 à 40 %,
le degré de bismaléinisation (BMG) étant calculé selon la formule]
BMG = 100 % x [(% en poids de (BM PIBSA)/(% en poids de (BM PIBSA) + % en poids de (PIBSA))],
% en poids (X) représentant la proportion en poids respective du composant X (X = PIBSA (polyisobutène maléinisé une fois) ou BM PIBSA (polyisobutène maléinisé plus d'une fois) dans le produit de transformation de polyisobutène avec de l'anhydride d'acide maléique.

**2.** Utilisation selon la revendication 1, **caractérisée en ce que** le polyisobutène (A) présente un poids moléculaire moyen en nombre $M_n$ de 500 à 2 500.

**3.** Utilisation selon la revendication 1 ou 2, **caractérisée en ce que** l'acide monocarboxylique ou dicarboxylique $\alpha,\beta$-insaturé ou ses dérivés (B) est l'anhydride d'acide maléique.

**4.** Utilisation selon l'une quelconque des revendications précédentes, **caractérisée en ce que** la proportion de polyisobutène n'ayant pas été transformé dans le produit de transformation n'est pas supérieur 30 % en poids.

**5.** Utilisation selon l'une quelconque des revendications précédentes pour la réduction de la corrosion de surfaces de métaux non ferreux.

**6.** Utilisation selon l'une quelconque des revendications précédentes dans des essences dotées d'une teneur en sodium et/ou en potassium en des quantités d'au moins 0,1 ppm en poids.

**7.** Utilisation selon l'une quelconque des revendications précédentes dans des essences dotées d'une teneur en magnésium et/ou en calcium en des quantités d'au moins 0,1 ppm en poids.

**8.** Utilisation selon l'une quelconque des revendications précédentes dans des essences dotées d'une teneur en zinc en des quantités d'au moins 0,1 ppm en poids.

**9.** Utilisation selon l'une quelconque des revendications précédentes pour la prévention et la réduction de dépôts dans le système de carburant.

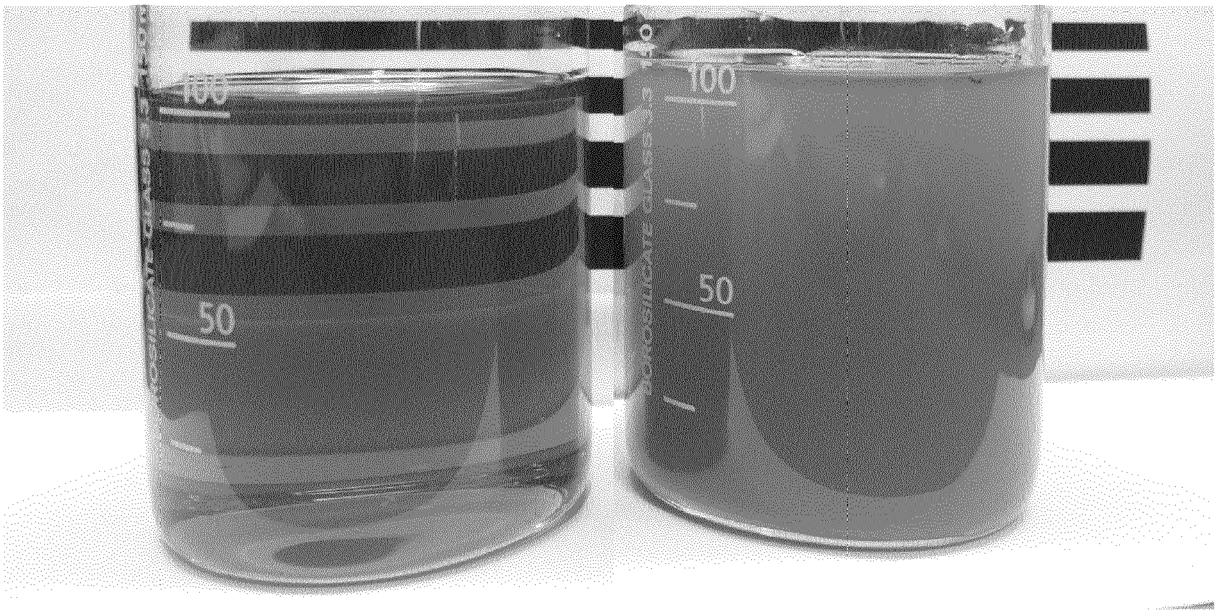


Figur 1

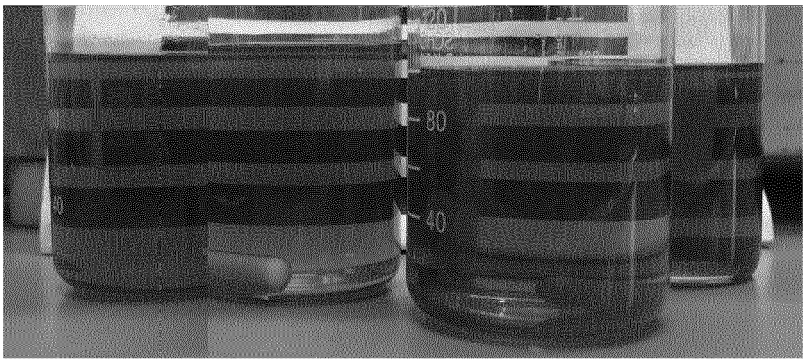


Figur 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2010042378 A1
- WO 2004024850 A1
- EP 235868 A1
- US 4655946 A
- EP 156310 A2
- US 5883196 A
- EP 244616 A
- WO 9424231 A
- WO 9703946 A
- DE 19620262 A
- WO 9603367 A
- WO 9603479 A
- EP 476485 A
- EP 307815 A
- WO 8701126 A
- EP 639632 A
- EP 310875 A
- EP 356725 A
- EP 700985 A
- US 4877416 A
- DE 3838918 A
- EP 831141 A
- DE 3826608 A
- DE 4142241 A
- DE 4309074 A
- EP 452328 A
- EP 548617 A
- DE 10102913 A
- WO 9929748 A
- WO 2005054314 A
- WO 2004035715 A
- EP 061895 A
- US 4491455 A
- WO 9318115 A
- EP 261957 A
- WO 0044857 A
- WO 98004656 A
- US 6743266 B2
- WO 0047698 A


### In der Beschreibung aufgeführte Nicht-Patentliteratur


- **JAMES J. HARRISON ; DONALD C. YOUNG ; CHARLES L. MAYNE.** *J. Org. Chem.,* 1997, vol. 62, 693-699
- **N. A. PLATE ; V. P. SHIBAEV.** Comb-Like Polymers. Structure and Properties. *J. Poly. Sci. Macromolecular Revs.,* 1974, vol. 8, 117-253
- Amines, aliphatic. Ullmanns Encyclopedia of Industrial Chemistry
- Ullmann's Encyclopedia of Industrial Chemistry. vol. A12, 617 ff